(19) Europäisches Patentamt
European Patent Office
Office européen des brevets

(11) **EP 4 288 821 B1**

(12) **EUROPÄISCHE PATENTSCHRIFT**

(45) Veröffentlichungstag und Bekanntmachung des Hinweises auf die Patenterteilung:
**10.07.2024   Patentblatt 2024/28**

(21) Anmeldenummer: **22718618.6**

(22) Anmeldetag: **25.03.2022**

(51) Internationale Patentklassifikation (IPC):
**G02B 21/00** *(2006.01)*     **G02B 27/58** *(2006.01)*

(52) Gemeinsame Patentklassifikation (CPC):
**G02B 21/0072; G02B 21/008; G02B 27/58**

(86) Internationale Anmeldenummer:
**PCT/EP2022/057879**

(87) Internationale Veröffentlichungsnummer:
**WO 2022/200549 (29.09.2022 Gazette 2022/39)**

(54) **VERFAHREN UND LICHTMIKROSKOP ZUM HOCHAUFGELÖSTEN UNTERSUCHEN EINER PROBE**

METHOD AND LIGHT MICROSCOPE FOR A HIGH-RESOLUTION EXAMINATION OF A SAMPLE

PROCÉDÉ ET MICROSCOPE OPTIQUE POUR L'ANALYSE À HAUTE RÉSOLUTION D'UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2021   DE 102021107704**

(43) Veröffentlichungstag der Anmeldung:
**13.12.2023   Patentblatt 2023/50**

(73) Patentinhaber: **Abberior Instruments GmbH 37077 Göttingen (DE)**

(72) Erfinder:
• **SCHMIDT, Roman** 37077 Göttingen (DE)
• **HARKE, Benjamin** 37083 Göttingen (DE)
• **REUSS, Matthias** 37083 Göttingen (DE)
• **KASTRUP, Lars** 37073 Göttingen (DE)

(56) Entgegenhaltungen:
DE-A1- 102010 036 709

• **FRANCISCO BALZAROTTI ET AL: "Supplementary Materials for Nanometer resolution imaging and tracking of fluorescent molecules with minimal photon fluxes", SCIENCE, vol. 355, no. 6325, 22 December 2016 (2016-12-22), US, pages 606 - 612, XP055767212, ISSN: 0036-8075, DOI: 10.1126/science.aak9913**
• **GWOSCH KLAUS C. ET AL: "MINFLUX nanoscopy delivers 3D multicolor nanometer resolution in cells", NATURE METHODS, vol. 17, no. 2, 1 February 2020 (2020-02-01), New York, pages 217 - 224, XP055899632, ISSN: 1548-7091, Retrieved from the Internet <URL:https://www.nature.com/articles/s41592-019-0688-0.pdf> DOI: 10.1038/s41592-019-0688-0**
• **MASULLO LUCIANO A. ET AL: "Pulsed Interleaved MINFLUX", NANO LETTERS, vol. 21, no. 1, 18 December 2020 (2020-12-18), US, pages 840 - 846, XP055867931, ISSN: 1530-6984, DOI: 10.1021/acs.nanolett.0c04600**
• **WEBER MICHAEL ET AL: "MINSTED fluorescence localization and nanoscopy", BIORXIV, 1 November 2020 (2020-11-01), XP055781490, Retrieved from the Internet <URL:https://www.biorxiv.org/content/10.1101/2020.10.31.363424v1.full.pdf> DOI: 10.1101/2020.10.31.363424**

EP 4 288 821 B1

## Beschreibung

### Technisches Gebiet der Erfindung

Die Erfindung bezieht sich auf ein Verfahren zum lichtmikroskopischen Untersuchen einer Probe, bei dem eine Drift der Probe oder eines Objekts in einer Probe gegenüber einer Messanordnung erfasst und ggf. korrigiert wird. Insbesondere bezieht sich die Erfindung auf ein entsprechendes Verfahren zum Untersuchen der Probe mittels Laserscanning- oder MINFLUX-Mikroskopie und auf ein dieses Verfahren ausführendes Lichtmikroskop.

In der MINFLUX-Mikroskopie werden die Positionen einzelner Partikel, meist einzelne Moleküle eines Fluoreszenzfarbstoffs, durch Abtasten der Partikel an mehreren Positionen mit einer ein lokales Intensitätsminimum aufweisenden Lichtverteilung eines Anregungslichts bestimmt. Aus den Positionen der einzelnen Partikel können hochaufgelöste Bilder der Probe oder Trajektorien der Partikel erstellt werden. Da die MINFLUX-Mikroskopie räumliche Auflösungen bis in den einstelligen Nanometerbereich erreichen kann, ist die MINLFUX-Mikroskopie in besonderem Maße auf die Stabilität der Probe bzw. der in der Probe untersuchten Objekte gegenüber den Messmitteln des Mikroskops angewiesen. Bereits kleinste Verlagerungen führen zu Ungenauigkeiten in der Lokalisierung und zu einer Bewegungsunschärfe in den aus den Positionen der Partikel erstellen Bildern.

Langsame Drifts der Probe gegenüber dem Mikroskop infolge von thermischer Ausdehnung können geräteseitig mit geeigneten mechanischen Designs und durch die Auswahl von Materialien mit kleinen Wärmeausdehnungskoeffizienten reduziert werden. Diese Maßnahmen sind allerdings mit erheblichem technischem Aufwand verbunden und können die Drift einer Probe vor allem über längere Messzeiten nicht vollständig verhindern. Insbesondere reichen die genannten konstruktiven Maßnahmen nicht aus, um Stabilitätsanforderungen im Bereich weniger Nanometer zu erfüllen, die bei der Verwendung hochauflösender Mikroskopieverfahren gefordert sind. Es besteht daher ein besonderes Interesse daran, auftretende Drifts präzise zu erfassen, um diese insbesondere durch Kompensation oder Datenkorrektur korrigieren zu können. Dabei soll das Erfassen der Drift die eigentliche Untersuchung der Probe möglichst wenig beeinträchtigen.

### Stand der Technik

Die Druckschrift WO 2015/097000 A1 sowie die Publikation "Balzarotti F, Eilers Y, Gwosch KC, Gynnå AH, Westphal V, Stefani FD, Elf J, Hell SW. Nanometer resolution imaging and tracking of fluorescent molecules with minimal photon fluxes. Science. 2017 Feb 10;355(6325):606-612. doi: 10.1126/science.aak9913. Epub 2016 Dec 22. PMID: 28008086." beschreiben ein inzwischen unter dem Akronym MINFLUX bekanntes Verfahren zur Lokalisierung räumlich isolierter, fluoreszenter Moleküle, bei dem jedes der einzelnen Moleküle mit einer ein Intensitätsminimum aufweisenden Intensitätsverteilung von Anregungslicht an verschiedenen Abtastpositionen beleuchtet wird. Für jede der Beleuchtungspositionen wird die durch das Anregungslicht angeregte Fluoreszenzemission registriert, und es wird aus dem Verlauf der Intensität des Fluoreszenzlichts entlang der Positionen des Intensitätsminimums auf die Position des jeweiligen Moleküls geschlossen. Naturgemäß ist diese Positionsbestimmung fehlerbehaftet, wobei der Fehler der Positionsbestimmung jedoch dadurch verringert werden kann, dass das Verfahren iterativ angewendet wird. Hierzu werden vor jedem Iterationsschritt die Beleuchtungspositionen angepasst, d. h. näher um die jeweils angenommene Position des Moleküls angeordnet. Gleichzeitig wird die Stärke des Anregungslichts erhöht, so dass der Intensitätsgradient in der Nähe des Intensitätsminimums zunimmt. Alternativ kann die Messdauer erhöht werden, was bezüglich der Menge des wirksamen Lichts einer Erhöhung der Stärke des Anregungslichts entspricht. Mit den angepassten Parametern wird das Molekül nacheinander an jeder der angepassten Beleuchtungspositionen beleuchtet und die Intensität der Fluoreszenzemission registriert. Aus der Abhängigkeit des Fluoreszenzsignals von den Abtastpositionen des Intensitätsminimums kann nun die Position des Moleküls mit geringerem Fehler als zuvor bestimmt werden. Diese Verfahrensschritte können bis zur Konvergenz der Positionsbestimmung oder bis zum Erreichen eines anderen Abbruchkriteriums, beispielsweise eines vorher festgelegten maximal akzeptablen Fehlers, wiederholt werden. Mit einer erreichbaren Lokalisierungsgenauigkeit von ca. 1 nm stellt das MINFLUX-Verfahren nach dem aktuellen Stand der Technik die präziseste kommerziell erhältliche Lokalisierungsmethode für fluoreszierende Moleküle dar.

Die Druckschrift WO 2015/097000 A1 offenbart weiter, dass aus den Positionsdaten der einzelnen Moleküle ein (hochaufgelöstes) Abbild der Verteilung der Moleküle in der Probe gewonnen werden kann ("MINFLUX Imaging"). Dieses Verfahren entspricht dem aus der STORM- und PALM-Mikroskopie bekannten Vorgehen zur Erzeugung hochaufgelöster Bilder aus einer Vielzahl von Positionsbestimmungen einzelner fluoreszenter Moleküle, resultiert im Falle der MINFLUX-Mikroskopie allerdings in einer nochmals gesteigerten räumlichen Auflösung der Bilder von 5 nm.

In der DE 10 2017 104 736 B3 ist eine Variante des MINFLUX-Verfahrens beschrieben, bei der das Abtasten der vereinzelt vorliegenden Fluoreszenzfarbstoffmoleküle nicht durch Beleuchten mit einer ein lokales Intensitätsminimum aufweisenden Intensitätsverteilung von Anregungslicht, sondern mit zwei im Wesentlichen komplementären Intensitätsverteilungen eines Anregungs- und eines Fluoreszenzverhinderungslichts erfolgt. Dabei weist die Intensitätsverteilung des Anregungslichts ein lokales Intensitätsmaximum auf, während die Intensitätsverteilung des Fluoreszenzverhinderungslichts an derselben Stelle ein lokales Intensitätsminimum aufweist. Bei dem Fluoreszenzverhinderungslicht kann es sich konkret um STED-Licht handeln, das in den Randbereichen der Intensitätsverteilung des Anregungslichts angeregte Fluoreszenzfarbstoffmoleküle durch Auslösen stimulierter Emission an der Aussendung von Fluoreszenzphotonen hindert. Bei dieser Ausführungsform des Verfahrens werden also das Anregungslicht und das Fluoreszenzverhinderungslicht mit solchen Intensitätsverteilungen überlagert, wie dies auch bei der RESOLFT- und der STED-Mikroskopie geschieht. Bei dieser Variante des MINFLUX-Verfahrens wird ausgenutzt, dass die Intensität des Fluoreszenzlichts, die für das jeweilige Fluoreszenzfarbstoffmolekül registriert wird, von dessen Abstand zu dem lokalen Intensitätsminimum des Fluoreszenzverhinderungslichts abhängt, und dass dessen Position mit hoher Genauigkeit aus den für mehrere Positionen des Intensitätsminimums des Fluoreszenzverhinderungslichts registrierten Intensitäten des Fluoreszenzlichts bestimmt werden kann. Auch bei dieser Variante des MINFLUX-Verfahrens kann das lokale Intensitätsminimum an wenigen Positionen in der Probe positioniert werden und die Auswertung der Intensitäten des registrierten Fluoreszenzlichts nach denselben Prinzipien erfolgen wie bei der MINFLUX-Mikroskopie. Als Unterschied verbleibt jedoch, dass bei der MINFLUX-Mikroskopie die Intensität des Fluoreszenzlichts von dem Fluoreszenzmarker mit zunehmendem Abstand seiner Position zu der Position des lokalen Intensitätsminimums zunimmt, während sie bei der Ausführungsform des Verfahrens, bei dem das weitere Licht Fluoreszenzverhinderungslicht ist, mit zunehmendem Abstand abnimmt.

Aus der STORM- und der PALM-Mikroskopie ist das Problem bekannt, dass sich die abzubildende Probe während der Datenaufnahme relativ zum Mikroskopsystem bewegt, was die Lokalisationsgenauigkeit kompromittiert. Bei der Bildrekonstruktion führt dies zu einer Bewegungsunschärfe und zu verwaschenen Bildern. Entsprechend der hohen Lokalisierungsgenauigkeit gilt diese Problematik bei der Lokalisierung von Molekülen nach dem MINFLUX-Verfahren in verstärktem Maße. Akzeptable Relativbewegungen zwischen der Probe und dem Mikroskopsystem liegen hier im Bereich von 1 nm oder darunter.

Aus dem Stand der Technik, insbesondere zur STORM- und PALM-Mikroskopie, sind verschiedene Ansätze zur Probenstabilisierung bekannt, wobei entweder eine Nachregelung der Probenposition während der Dauer des Datenaufnahme oder eine nachträgliche Korrektur der Bilddaten vorgeschlagen wird.

Aus der DE 199 59 228 A1 ist ein Laserscanningmikroskop mit einem Temperatursensor bekannt, bei dem die Fokuslage um einen aus einer Kalibrationskurve für die jeweils aktuelle Temperatur ermittelten Korrekturwert nachgeführt wird. Dieses Verfahren ist allerdings auf die Korrektur von thermischen Drifts in axialer Richtung, d.h. der Fokussierung, beschränkt.

In der EP 1 548 485 A1 wird ein Verfahren und ein dieses Verfahren ausführendes Mikroskop vorgeschlagen, bei dem Bilder eines vorzugsweise unbeweglichen Objekts zu unterschiedlichen Zeitpunkten aufgenommen werden, wobei zur Berechnung der Drift zwischen den Bildaufnahmen ein Bewegungsschätzer verwendet wird, bei dem die Drifterkennung über den Vergleich von korrespondierenden Blöcken (und ggf. Unterblöcken) der Bilder erfolgt. Die für die Blöcke einzeln ermittelten Drifts können anschließend zu einer Gesamtdrift verrechnet werden. Die eigentliche Korrektur kann entweder durch nachträgliche Bearbeitung der Bilddaten oder durch Nachführung der Strahl- oder Probenlage während der Bildaufnahme erfolgen.

R. McGorty, D. Kamiyama, B. Huang, "Active microscope stabilization in three dimensions using image correlation", Optical Nanoscopy 2 (1), 3 (2013) offenbart ein Verfahren, bei dem die Drift der Probe durch Nachführen eines Piezo-getriebenen Probentisches bis auf 10 nm in x- und y-Richtung und 20 nm in z-Richtung kompensiert wird. Dabei wird die Probendrift durch Kreuzkorrelation von Durchlichtbildern der Probe mit einem Referenz-Durchlichtbild bestimmt, wobei die Drift in x- und y-Richtung aus der Lage des Maximums der Kreuzkorrelation und die Drift in z-Richtung aus dessen Amplitude bestimmt werden. Zur Aufnahme der Durchlichtbilder wird die Probe mit Infrarotlicht durchleuchtet, das die Fluoreszenzbildgebung nicht beeinflusst.

Aus J. Prescher, "Assembly and optimization of a super-resolution STORM microscope for nanoscopic imaging of biological structures", Dissertation, München (2016) ist ein Verfahren zur lateralen Driftkorrektur in der PALM-/STORM-Mikroskopie bekannt, für das fluoreszierende Nanopartikel als Referenzobjekte in die Probe eingebracht werden. Zur Bestimmung der Drift der Probe in x- und y-Richtung werden während der STORM-Datenaufnahme wiederholt Epifluoreszenzbilder dieser Nanopartikel aufgenommen und mit einem anfangs aufgenommenen Referenz-Epifluoreszenzbild korreliert. Aus der Lage des Maximums der Kreuzkorrelation wird die Drift in x- und y-Richtung für den jeweiligen Zeitpunkt bestimmt und zur Positionskorrektur bei der Lokalisierung der fluoreszierenden Einzelmoleküle herangezogen.

Aus C. Geisler et al., "Drift estimation for single marker switching based imaging schemes", Optics Express 20, 7274 (2012) ist ein ebenfalls auf der Korrelation von mehreren Kamera(roh-)bildern beruhendes Verfahren zur Driftkorrektur in der STORM-/ PALM-Mikroskopie bekannt, bei dem allerdings die Probendrift als Funktion der Zeit durch paarweise Korrelation aller Kamera(roh-) bilder, nicht nur durch Korrelation mit einem einzigen Referenzbild, bestimmt wird. Ohne dass sonstige Annahmen über die Ursache oder die Art des Drifts gemacht werden müssen oder dass die Datenaufnahme modifiziert werden muss, kann die Genauigkeit bei der Einzelmolekül-Lokalisierung erheblich verbessert werden.

**Aufgabe der Erfindung**

Der Erfindung liegt die Aufgabe zugrunde, ein Verfahren und ein Lichtmikroskop zum Untersuchen einer Probe anzugeben, bei dem während des Untersuchens der Probe eine Drift der Probe oder eines Objekts in einer Probe gegenüber einer Messanordnung erfasst und ggf. korrigiert wird. Dabei muss das Erfassen und die Korrektur auch die Genauigkeitsanforderungen der MINFLUX-Mikroskopie erfüllen und soll die Untersuchung der Probe möglichst wenig beeinträchtigen.

**Lösung**

Die Aufgabe der Erfindung wird durch ein Verfahren nach dem unabhängigen Anspruch 1, und durch ein Lichtmikroskop nach dem unabhängigen Anspruch 15 gelöst. Die abhängigen Ansprüche 2-13 betreffen bevorzugte Ausführungsformen des Verfahrens, der abhängige Anspruch 14 die Verwendung eines Probenträgers in dem erfindungsgemäßen Verfahren.

**Beschreibung der Erfindung**

Bei der Erfindung handelt es sich um ein Verfahren zum lichtmikroskopischen Untersuchen einer Probe, bei dem die Probe an mehreren Beleuchtungspositionen mit fokussiertem Laserlicht beleuchtet und ein optisches Signal aus der Probe detektiert wird. Das Untersuchen der Probe mit dem fokussiertem Laserlicht kann dabei nach einem breiten Spektrum von Aufnahmemodalitäten erfolgen, beispielsweise mit konfokaler Laserscanningmikroskopie, STED-Mikroskopie oder auch durch Lokalisierung einzelner Partikel in der Probe nach einem MINFLUX-Verfahren. Charakteristisch ist, dass das Beleuchten der Probe mit dem fokussiertem Laserlicht und das Detektieren des optischen Signals ortsbezogen und ggf. mit hoher räumlicher Auflösung erfolgt und daher anfällig für eine Verfälschung infolge von Drift der Probe ist.

Erfindungsgemäß wird daher eine Drift der Probe durch eine wiederholte Bestimmung der Position mindestens eines Referenzmarkers nach dem MINFLUX-Prinzip erfasst, wobei die Positionsbestimmung der Referenzmarker in den Messablauf der Untersuchung der Probe integriert ist und wiederholt zwischen der Beleuchtung der Probe an aufeinander folgenden Beleuchtungspositionen erfolgt. Das Verfahren ermöglicht es insbesondere, die Drift der Probe über lange Zeiträume, d. h. über Stunden oder Tage hinweg zu verfolgen und zu kompensieren. Prinzipbedingt ist das Verfahren (anders als einige alternative Verfahren) nicht auf eine Drifterfassung in zwei Dimensionen beschränkt, sondern kann wahlweise in einer, zwei oder drei Raumrichtungen angewendet werden.

Das MINFLUX-Verfahren zur Positionsbestimmung des mindestens einen Referenzmarkers ist dadurch gekennzeichnet, dass der Referenzmarker mit einer ein lokales Minimum aufweisenden Intensitätsverteilung eines Abtastlichts an mehreren Abtastpositionen um seine (vermutete) Position beleuchtet wird, wobei das Abtastlicht eine Lichtemission des Referenzmarkers induziert oder moduliert. Die Anordnung der Abtastpositionen erfolgt dabei in einem Nahbereich - typischerweise innerhalb einer Airy-Scheibe - um die (beispielsweise aus einer vorhergehenden Messung) zumindest näherungsweise bekannte Position des Referenzmarkers. Aus den an den verschiedenen Abtastpositionen registrierten Lichtemissionen kann die Position des Referenzpartikels mit verbesserter Genauigkeit beispielsweise durch Bilden einer gewichteten Vektorsumme bestimmt werden. Die Abtastpositionen können schrittweise von dem Abtastlicht beleuchtet werden oder die Abtastpositionen können auf einer Kurve liegen oder Streckenabschnitte definieren, entlang derer die Probe durch kontinuierliche Verschiebung des Anregungslichtstrahls relativ zu der Probe beleuchtet wird. Im zweiten Fall können Zeitintervalle (*dwell times*) während der kontinuierlichen Verschiebung des Anregungslichtstrahls definiert werden, mittels derer die von dem Detektor detektierten Photonen bestimmten Abtastpositionen zugeordnet werden, ähnlich wie dies z.B. vom kontinuierlichen Linien-Scan bei der konfokalen Lasermikroskopie bekannt ist. Die Abtastpositionen sind um eine vermutete Position des Referenzmarkers angeordnet - das bedeutet, dass die Abtastpositionen innerhalb eines Kreises oder einer Kugel (z.B. des oben erwähnten Nahbereichs) um die vermutete Position liegen. Selbstverständlich schließt dies auch lediglich zwei Abtastpositionen ein, die z.B. auf gegenüberliegenden Seiten auf einer die vermutete Position schneidenden Linie liegen.

Die konkrete Ausgestaltung des MINFLUX-Verfahrens kann in vielen Aspekten variiert werden, hierzu sei ebenfalls auf den Stand der Technik zur MINFLUX-Mikroskopie verwiesen, für den hier lediglich beispielhaft auf die Veröffentlichungen von K. C. Gwosch et al. (2019), "MINFLUX Nanoscopy Delivers Multicolor Nanometer 3D-Resolution in (Living) Cells", bioRxiv doi: 10.1101/734251 und M. Weber et al. (2020), "MINSTED fluorescence localization and nanoscopy", bioRxiv doi: 10.1101/2020.10.31.363424 verwiesen sei. Im Sinne der vorliegenden Beschreibung der Erfindung und der Patentansprüche ist der Begriff der MINFLUX-Verfahren daher weitreichend auszulegen und soll alle Ausführungsformen, die wenigstens die zuvor genannten (und gegebenenfalls weitere) Merkmale aufweisen, umfassen.

Die Art der Lichtemission zur Lokalisierung der Referenzmarker kann sehr unterschiedlich sein, insbesondere kann es sich um eine Fluoreszenz oder Phosphoreszenz, ein Rayleigh- oder Raman-Streulicht, ein CARS-Streulicht (engl. *Coherent Anti Stokes Raman Scattering*) oder eine durch Frequenzvervielfachung (Frequenzverdopplung, Frequenzverdreifachung usw.) des oder durch Frequenzmischung mit dem Abtastlicht erzeugte Lichtemission handeln. Erfindungsgemäß ist das Abtastlicht geeignet, die jeweilige Art der Lichtemission der Referenzmarker anzuregen bzw. zu induzieren oder diese in ihrer Intensität zu modulieren, wobei sich die Modulation verstärkend oder abschwächend auf die Intensität der Lichtemission auswirken kann. Wenn das Abtastlicht modulierend wirkt und nicht selbst eine Lichtemission des Referenzmarkers anregt bzw. induziert, ist es erforderlich, die Referenzmarker zusätzlich mit einem Anregungslicht zu beleuchten. Beispielsweise können fluoreszente Referenzmarker mit einem die Fluoreszenz anregenden Abtastlicht abgetastet werden. Es ist aber ebenso möglich, dass das Abtastlicht eine stimulierte Emission auslöst und so die spontane (Fluoreszenz-)Emission der Referenzmarker unterdrückt; in diesem Fall müssen die Referenzmarker mit einem zusätzlichen Anregungslicht zur Abgabe der Lichtemission angeregt werden.

Die Referenzmarker sind insbesondere fotostabil. Das bedeutet, dass die Lichtemission der Referenzmarker über einen gewünschten Zeitraum eines lichtmikroskopischen Experiments weitgehend unverändert bleibt. Insbesondere bleichen die Referenzmarker also in dem gewünschten Zeitraum nicht und es treten in dem gewünschten Zeitraum keine Dunkelzustände der Referenzmarker auf. Der entsprechende Zeitraum kann je nach den Anforderungen des Experiments variieren. Für Langzeitmessungen können z.B. Zeiträume von Stunden bis Tagen wünschenswert sein. Bei bestimmten Experimenten kann allerdings auch ein Zeitraum von weniger als einer Sekunde, einer Millisekunde oder sogar einer Mikrosekunde ausreichend sein.

In einer bevorzugten Ausführungsform des erfindungsgemäßen Verfahrens erfolgt das Untersuchen der Probe durch eine Aufnahme von Bildern der Probe mit einem Laserscanningverfahren, beispielsweise mittels konfokaler oder STED-Mikroskopie. Die Bildaufnahme erfolgt in diesen Fällen typischerweise durch zeilenweises Abrastern der Probe mit fokussiertem Anregungslicht und, im Falle der STED-Mikroskopie, zusätzlich mit einer dem fokussierten Anregungslicht überlagerten, ein lokales Minimum aufweisenden Intensitätsverteilung des STED-Lichts. Das Abrastern kann hierbei regelmäßig - beispielsweise nach Abrastern einer vorgegebenen oder vorgebbaren Anzah von Scanzeilen - oder in festen zeitlichen Abständen unterbrochen werden, um die Positionsbestimmung eines Referenzmarkers nach dem MINFLUX-Verfahren vorzunehmen und eine Drift zu ermitteln. Das Abrastern der Probe kann dann unter Berücksichtigung der ermittelten Drift mit einer korrigierten Ansteuerung der Abrasterung fortgeführt werden. Um den Einfluss der Drift auf das Bild der Probe vollständig zu eliminieren, muss die Genauigkeit der Driftkorrektur unterhalb des räumlichen Auflösungsvermögens des Laserscanningverfahrens liegen, idealerweise um einen Faktor $\geq 2$. Da MINFLUX-Verfahren inhärent eine signifikant höhere Auflösung als Laserscanningverfahren erreichen, ist diese Anforderung regelmäßig erfüllt.

In einer weiteren bevorzugten Ausführungsform des erfindungsgemäßen Verfahrens erfolgt nicht nur die Positionsbestimmung der Referenzmarker, sondern auch die Untersuchung der Probe mit einem MINFLUX-Verfahren. Dazu enthält die Probe neben den Referenzmarkern weitere, mit einem MINFLUX-Verfahren lokalisierbare Partikel, die ebenfalls fluoreszente oder lichtstreuende Eigenschaften aufweisen, von den Referenzmarkern aber unterscheidbar sind. In vielen Anwendungen sind diese Partikel einzelne Moleküle eines Fluoreszenzfarbstoffs, mit dem eine interessierende Struktur in der Probe markiert ist. Für die Markierung geeignet sind dabei Fluoreszenzfarbstoffe, die neben einem fluoreszenten auch einen nichtfluoreszenten Zustand aufweisen und bei denen das Verhältnis von Farbstoffmolekülen im fluoreszenten Zustand zu Farbstoffmolekülen im nichtfluoreszenten Zustand so eingestellt werden kann, dass zu jedem Zeitpunkt pro beugungsbegrenztem Volumen nur ein einzelnes Farbstoffmolekül im fluoreszenten Zustand vorliegt, so dass eine unabhängige Lokalisierung einzelner Moleküle möglich ist. Die Einstellung des Verhältnisses zwischen fluoreszenten und nichtfluoreszenten Farbstoffmolekülen kann durch Anpassung der chemischen Zusammensetzung des Mediums oder auch lichtinduziert erfolgen; der Fachmann kann hierzu auf den Stand der Technik zur PALM-/STORM und MINFLUX-Mikroskopie zurückgreifen.

In dieser Ausführungsform werden beim Untersuchen der Probe zunächst Koordinaten der lokalisierten Partikel erhoben, aus denen im Anschluss hochaufgelöste Bilder der Probe und / oder Trajektorien einzelner Partikel bestimmt werden können. Dabei kann eine Driftkorrektur einerseits dadurch vorgenommen werden, dass die Probe um den jeweiligen Betrag der Drift nachgeführt wird, die aus der Positionsbestimmung der Referenzmarker ermittelt wurde. Es ist aber auch möglich, die Koordinaten der Partikel rein rechnerisch um den Betrag der Drift zu korrigieren, so dass eine Nachführung der Probe nicht erfolgen muss. In diesem Fall kann z.B. ein driftkorrigiertes Bild bereits als Live-Bild während der Messung auf einer Anzeigeeinheit angezeigt werden.

Wenn die Untersuchung der Probe nach einem MINFLUX-Verfahren erfolgt, muss die Präzision der Driftkorrektur höher sein als die der Lokalisierung einzelner Partikel zur Untersuchung der Probe. Um den Einfluss der Drift auf die Lokalisierungen vollständig zu eliminieren, ist eine um einen Faktor $\geq 2$ höhere Präzision anzustreben. Da sowohl die Untersuchung der Probe als auch die Driftbestimmung der Probe mit MINFLUX-Verfahren erfolgen, ist das methodisch bedingte räumliche Auflösungsvermögen bei beiden gleich. Allerdings hängt die jeweilige Lokalisierungsgenauigkeit bei MINFLUX von mehreren Aufnahmeparametern ab, insbesondere der Anzahl an Lokalisierungs-Iterationen, der jeweiligen Anordnung der Abtastpositionen und der Intensität des Abtastlichts. Da die Referenzmarker eine weitaus höhere Fotostabilität als einzelne Farbstoffmoleküle aufweisen, kann die Lokalisierung der Referenzmarker mit einer höheren Auflösung erfolgen.

Bei der Untersuchung der Probe nach einem MINFLUX-Verfahren muss die Messung selbstverständlich nicht zwischen dem Beleuchten der Probe mit dem Abtastlicht an den Beleuchtungspositionen zur Lokalisierung eines Fluorophors (also während einer MINFLUX-Lokalisierungssequenz) unterbrochen werden, sondern es können auch z.B. eine gesamte Lokalisierung eines Fluorophors oder sogar Lokalisierungen mehrerer verschiedener Fluorophore nacheinander durchgeführt werden, bevor die Messung unterbrochen und eine Positionsbestimmung der Referenzmarker durchgeführt wird.

Eine besonders vorteilhafte Ausführungsform des erfindungsgemäßen Verfahrens ergibt sich, wenn das Laserlicht zum Untersuchen der Probe gleichzeitig (d.h. innerhalb derselben Messung) als Abtastlicht zum Bestimmen der Positionen der Referenzmarker verwendet wird. Eine derartige Doppelnutzung des Laserlichts bietet sich insbesondere an, wenn zum Zweck der Untersuchung der Probe mittels MINFLUX- oder STED-Mikroskopie ohnehin eine Intensitätsverteilung eines Anregungs- oder STED-Lichts erzeugt wird, die ein lokales Intensitätsminimum aufweist. In diesen Fällen können die gleichen Strahlablenkmittel, die für die Untersuchung der Probe mittels der MINFLUX- oder STED-Mikroskopie vorgesehen sind, durch geeignete Ansteuerung auch genutzt werden, um das Laserlicht auf Referenzmarker in der Probe zu richten, deren Position nach dem MINFLUX-Prinzip zu ermitteln und durch wiederholte derartige Positionsbestimmungen eine Drift zu erfassen. Diese Implementation einer Drifterfassung (und ggf. einer Driftkorrektur) lässt sich ohne großen Aufwand in den Ablauf der Untersuchung der Probe integrieren und kommt ohne zusätzliche optische oder mechanische Komponenten aus. Sie ist daher gegenüber alternativen Lösungen, die zusätzliche Strahlengänge, Lichtquellen und / oder Detektionsvorrichtungen erfordern, konstruktiv einfacher und wirtschaftlich vorteilhaft. Ein noch wichtigerer, da fundamentaler Vorteil ist allerdings, dass das Verfahren die Drift der Referenzmarker gegenüber genau dem optischen Abbildungssystem erfasst, mit dem die Untersuchung der Probe erfolgt. Darin unterscheidet sich die Drifterfassung von alternativen Verfahren zur Drifterfassung, bei denen in der Regel zusätzliche Lichtquellen, optische Elemente, separate Strahlengänge und Detektoren oder sonstige Sensoren erforderlich sind und bei denen eine Drift zwischen der Probe, einem Probenträger oder einer Komponente des Mikroskops einerseits und den zusätzlichen Elementen zur Drifterfassung andererseits detektiert wird. Eine mögliche Drift zwischen diesen zusätzlichen Elementen zur Drifterfassung und dem optischen Abbildungssystem zur Untersuchung der Probe kann so nicht erfasst werden.

Insbesondere weist bei der oben beschriebenen Doppelnutzung des Abtastlichts das Abtastlicht dieselbe Lichtverteilung (z.B. eine donutförmige oder *Bottle-Beam-förmige* Lichtverteilung) am Fokus auf wie das Laserlicht zum Untersuchen der Probe. Bei der Variante des MINFLUX-Verfahrens, bei der die Probe mit einer Überlagerung zwischen einer gaußförmigen Anregungslichtverteilung und einer Verteilung von Fluoreszenzverhinderungslicht mit einem lokalen Minimum beleuchtet wird, handelt es sich insbesondere bei dem Fluoreszenzverhinderungslicht um das Abtastlicht, welches gleichzeitig zum Untersuchen der Probe genutzt wird. Dieses kann sowohl bei der Positionsbestimmung der Referenzmarker als auch bei der Untersuchung der Probe dieselbe Lichtverteilung am Fokus aufweisen.

Eine Verwendung des Laserlichts zum Untersuchen der Probe als Abtastlicht kann z.B. auf einfache Weise mit lichtstreuenden Nanopartikeln (z.B. Gold-Beads) verwirklicht werden, da diese Licht eines breiten Wellenlängenbereichs streuen, so dass insbesondere diverse Arten von Anregungslasern für Fluorophore in der Probe auch zum Erzeugen des Lichtstreusignals genutzt werden können.

In einer bevorzugten Ausführungsform des Verfahrens wird aus den Positionen des mindestens einen Referenzmarkers eine Drift des Referenzmarkers gegenüber einem optischen Abbildungssystem des Mikroskops berechnet und die Drift durch eine Positionskorrektur einer Strahlablenkeinheit oder durch Nachführen der Probe kompensiert. Dies kann beispielsweise dadurch erfolgen, dass eine Offsetspannung zu einer die Position der Strahlablenkeinheit oder eines Probenpositioniertischs kontrollierenden Steuerspannung addiert oder ein entsprechender Offset zu einem digital vorliegenden Positionswert addiert wird.

Wie bereits dargelegt, ist die Positionsbestimmung der Referenzmarker in den Messablauf der Untersuchung der Probe integriert und erfolgt wiederholt zwischen der Beleuchtung der Probe an aufeinander folgenden Beleuchtungspositionen. Dabei kann die Position des mindestens einen Referenzmarkers in regelmäßigen Zeitintervallen oder nach jeweils einer festen Zahl von Beleuchtungspositionen bestimmt werden. Gegebenenfalls ist es allerdings auch sinnvoll, die Positionsbestimmung nicht oder nicht ausschließlich in festen Abständen vorzunehmen, sondern der jeweiligen Driftgeschwindigkeit der Probe anzupassen. Dieses Vorgehen bietet sich insbesondere nach dem Einlegen der Probe in das Mikroskop oder nach einem (manuellen) Bewegen der Probe an, in deren Folge es zunächst zu einer vergleichsweise schnellen Probendrift kommt. In dieser Phase ist die Position des oder der Referenzmarker in kürzeren Abständen zu bestimmen, während nach dem Setzen der Probe die Driftgeschwindigkeit abnimmt und die zeitlichen Abstände der Positionsbestimmungen vergrößert werden können. Hierzu bietet es sich an, aus den Positionsbestimmungen eine Driftkurve zu berechnen und durch Extrapolation dieser Driftkurve den Zeitpunkt zu bestimmen, an dem die Probe um einen vorgegebenen, maximal akzeptablen Betrag gedriftet ist. Die Drift kann dazu beispielsweise durch eine exponentiell abklingende Exponentialfunktion modelliert werden.

Eine Anpassung der zeitlichen Abstände der Positionsbestimmung des oder der Referenzmarker ist vor allem im Hinblick darauf wichtig, dass die Positionsbestimmung nach dem MINFLUX-Verfahren über einen begrenzten Fangbereich verfügt, d. h. eine eindeutige Positionsbestimmung des Referenzmarkers nur dann möglich ist, wenn die Abtastpositionen in nicht zu großer Entfernung von der tatsächlichen Position des Referenzmarkers angeordnet sind. Dieser Fangbereich beträgt typischerweise rund 200 nm, und es muss sichergestellt werden, dass der oder die Referenzmarker zwischen aufeinanderfolgenden Positionsbestimmungen den Fangbereich nicht verlassen.

Die Häufigkeit, mit der die Untersuchung der Probe unterbrochen wird, um die Drift durch Positionsbestimmung der Referenzmarker neu zu bestimmen, ist allerdings gegen den dafür erforderlichen Zeitaufwand abzuwägen. Je häufiger die Driftbestimmung durchgeführt wird, desto geringer wird die für die eigentliche Untersuchung der Probe anteilig zur Verfügung stehende Messzeit. Insbesondere in sich dynamischen verändernden Proben sind häufige Unterbrechungen der Probenuntersuchung oft inakzeptabel. Daher ist es bevorzugt, dass die Driftbestimmung einen Anteil von 5 %, bevorzugt von 2 % und besonders bevorzugt von 1 % an der gesamten Messzeit nicht überschreitet. In besonderen Fällen kann es auch vorteilhaft sein, ein weiteres, externes Verfahren zur Driftbestimmung und / oder zur Driftkorrektur zusätzlich einzusetzen; dieses kann sich ebenfalls auf die in der Probe befindlichen Referenzmarker oder auch auf eine andere Regelgröße stützen. Dabei ist es akzeptabel, wenn das externe Verfahren zur Driftbestimmung selbst keine Langzeitstabilität erzielt, weil es beispielsweise selbst einer langsameren Drift gegenüber dem optischen System unterliegt, mit dem die Untersuchung der Probe erfolgt. In dieser Konstellation dient die erfindungsgemäße Positionsbestimmung der Referenzmarker dazu, eine Nullpunktkorrektur für das externe Verfahren zur Driftbestimmung durchzuführen, die in größeren zeitlichen Abständen vorgenommen werden kann als die Driftbestimmung der Probe selbst.

Entscheidend für die Durchführbarkeit des erfindungsgemäßen Verfahrens ist, dass die Position eines gegebenen Referenzmarkers zuverlässig über einen längeren Zeitraum wiederholt bestimmt werden kann, der Referenzmarker also nur einer äußerst geringen oder gar keiner Degradation (zum Beispiel in Form eines Fotobleichens) unterliegt. Für kürzere Messungen kann es ausreichen, wenn die Positionsbestimmung eines Referenzmarkers 100-mal oder 1000-mal wiederholt werden kann, aber für Langzeitmessungen über mehrere Stunden oder sogar Tage sind bis zu 10000 Wiederholungen erforderlich.

Eine weitere Anforderung an die Referenzmarker besteht darin, dass sie sich zum Zeitpunkt einer jeden Positionsbestimmung in einem emittierenden Zustand befinden, damit eine durchgehende Nachverfolgung der Drift erfolgen kann. Sofern die Referenzmarker temporäre Dunkelzustände annehmen können (wie es für organische Fluoreszenzfarbstoffe regelmäßig der Fall ist), ist zu diesen Zeiten eine Positionsbestimmung nicht möglich. Es kann daher die Situation eintreten, dass die Probe während der Dauer eines Dunkelzustands des Referenzmarkers so weit driftet, dass der Referenzmarker den Fangbereich verlässt. Daher sollten die Referenzmarker idealerweise keine Dunkelzustände aufweisen, sich während der Messung aber zumindest nicht mehr als 10 %, bevorzugt nicht mehr als 5 %, der Zeit in einem Dunkelzustand befinden, in dem eine Lichtemission nicht induziert oder angeregt werden kann.

Aufgrund der Stabilitätsanforderungen eignen sich einzelne Moleküle organischer Fluoreszenzfarbstoffe, wie sie oft zur Aufnahme hochaufgelöster Bilder oder Trajektorien nach einem MINFLUX-Verfahren verwendet werden, in der Regel nicht als Referenzmarker für das erfindungsgemäße Verfahren. Stattdessen kommen als fluoreszente Referenzmarker bevorzugt mit hochstabilen Fluorophoren dotierte Nanopartikel in Betracht, insbesondere mit Ionen oder Komplexverbindungen der Seltenerdmetalle Cer, Praseodym, Neodym, Samarium, Europium, Terbium, Dysprosium, Erbium, Thulium und Ytterbium dotierte Nanopartikel. Derartige Nanopartikel sind äußerst fotostabil. Alternativ eignen sich auch fluoreszente (Halbleiter-) Quantenpunkte oder fluoreszente Fehlstellen aufweisende Nanodiamanten als fluoreszente Referenzmarker.

Die Referenzmarker müssen nicht notwendigerweise fluoreszent sein, sondern können eine Lichtemission auch durch (elastische oder nichtelastische) Streuung des Abtastlichts hervorrufen. Insofern stellen auch metallische Nanopartikel oder *Nanorods* bevorzugte Referenzmarker dar, insbesondere, da die Lichtstreuung an diesen metallischen Partikeln nicht durch Dunkelzustände beeinträchtigt wird und die Partikel sich zudem durch eine hohe chemische und fotophysikalische / fotochemische Stabilität auszeichnen. Dabei kann der Kontrast der Lichtemission gegenüber dem Umgebungslicht oder gegenüber unerwünschten Lichtreflektionen, die beispielsweise an optischen Grenzflächen im Strahlengang, insbesondere an den Grenzflächen eines Deckglases, auftreten können, verbessert werden, indem die von dem Referenzmarker emittierte Lichtemission selektiv mit nur einer Polarisation detektiert wird, die orthogonal ist zu der Polarisation des Abtastlichts. Dabei wird ausgenutzt, dass bei der Lichtstreuung an Nanopartikeln in der Regel eine Depolarisation oder eine Änderung des Polarisationszustands des Abtastlichts auftritt. Das depolarisierte oder in seinem Polarisationszustand veränderte Streulicht kann daher durch einen Analysator detektiert werden, der die Polarisation des Abtastlichts blockt und so das an Grenzflächen reflektierte Abtastlicht ausblendet. Eine einfache Ausführungsform dieser Variante wird durch Anordnen gekreuzter linearer Polarisatoren in dem Strahlengang des Abtastlichts bzw. vor dem Streulichtdetektor für die Lichtemission erzielt. Alternativ kann linear polarisiertes Abtastlicht mit einem Polarisationsstrahlteiler in den Mikroskopstrahlengang eingespiegelt werden. Da das depolarisierte, von den Referenzmarkern gestreute und im Mikroskopstrahlengang dem Abtastlicht in entgegengesetzter Richtung propagierende Streulicht gegenüber dem Abtastlicht gedrehte Polarisationskomponenten aufweist, können diese Komponenten des Streulichts den Polarisationsstrahlteiler passieren und mit einem in Transmissionsrichtung hinter dem Polarisationsstrahlteiler angeordneten Detektor (selektiv) detektiert werden, während an optischen Grenzflächen im Strahlengang reflektiertes Abtastlicht die gleiche Polarisation wie das einfallende Abtastlicht aufweist und in der Rückrichtung durch den Polarisationsstrahlteiler wieder ausgespiegelt wird.

Lichtstreuende Nanopartikel in der Probe werden teilweise auch für andere Probenstabilisierungs-Verfahren genutzt, wie z.B. für die in der Druckschrift WO 2020/201430 A1 beschriebene Methode. Hieraus können sich Synergieeffekte ergeben.

Generell besteht bei dem erfindungsgemäßen Verfahren das Erfordernis, dass Referenzmarker in der Probe zunächst identifiziert bzw. aufgefunden und ihre Position zumindest näherungsweise bestimmt werden müssen. Hierzu kann die Probe oder ein Ausschnitt der Probe vor Beginn der Untersuchung abgebildet werden, und es können ein oder mehrere Referenzmarker in diesem Bild identifiziert und seine Position / ihre Positionen näherungsweise bestimmt werden. Alternativ kann ein Referenzmarker auch im Rahmen seiner erstmaligen Positionsbestimmung gesucht werden, indem die Probe mit dem Abtastlicht scannend abgetastet wird, bis ein Referenzmarker anhand seiner Lichtemission detektiert wird. Die letzte Scanposition kann dann als Ausgangspunkt für die Positionsbestimmung des Referenzmarkers nach dem MINFLUX-Verfahren dienen. In einer bevorzugten Ausführungsform des erfindungsgemäßen Verfahrens werden die Referenzmarker anhand der Wellenlänge ihrer Lichtemission in der Probe aufgefunden und / oder identifiziert. Dazu muss sich die Wellenlänge der Lichtemission der Referenzmarker von anderen Lichtsignalen aus der Probe unterscheiden. Ist die Probe beispielsweise mit einem Fluoreszenzfarbstoff gefärbt, so ist dessen Fluoreszenzemission gegenüber der Wellenlänge des Anregungslichts rotverschoben (Stokes-Verschiebung), erfolgt also bei größeren als der Anregungswellenlänge. Bei einer (elastischen) Streuung desselben Anregungslichts an den Referenzmarkern dagegen entsteht ein Streulichtlichtsignal, dessen Wellenlänge der der Anregung entspricht, so dass die Referenzmarker anhand der Wellenlänge von der Fluoreszenz aus Probe unterschieden werden können, auch wenn dasselbe Anregungslicht zur Anregung der Fluoreszenz und zur Streuung an den Referenzmarkern verwendet wird.

Ebenso kann eine Unterscheidung der Lichtemission der Referenzmarker von anderen, aus der Probe detektierten Signalen anhand statistischer Merkmale des Photonenstroms der Lichtemission erfolgen. So erfolgt die Lichtstreuung an einem als Referenzmarker verwendeten metallischen Nanopartikel instantan, während der fluoreszente, elektronisch angeregte Zustand eines Fluoreszenzfarbstoffs, mit dem eine Struktur in der Probe angefärbt ist, gemäß einer exponentiell abfallenden Verteilung mit einer Abklingzeit von typischerweise wenigen Nanosekunden durch Fluoreszenz zerfällt. Eine zeitliche Trennung von Streulicht und Fluoreszenz ist daher möglich, wenn zur Lichtdetektion zeitauflösende Detektionsverfahren (beispielsweise zeitkorreliertes Photonenzählen) eingesetzt werden, wie sie aus dem Stand der Technik zur Fluoreszenzspektroskopie und zur *Fluorescence Lifetime Imaging* (FLIM) umfassend bekannt sind. Auch kann die Lichtemission fluoreszenter Referenzmarker von anderen Fluoreszenzsignalen aus der Probe zeitlich unterschieden werden, sofern sich die Fluoreszenzlebensdauern beider Signale signifikant voneinander unterscheiden.

Neben der Lebensdauer des angeregten Zustands können zur Trennung auch andere statistische Parameter des Photonenstroms herangezogen werden. Wie bereits oben dargestellt, weisen beispielsweise fast alle Fluorophore transiente Dunkelzustände auf, in die die Fluorophore temporär übergehen können. Der Photonenstrom der Fluoreszenzemission wird daher auch bei konstanter Anregung immer wieder durch Phasen unterbrochen, in denen keine Fluoreszenzemission stattfindet. Die Dauer der Ein-Zustände, in denen eine Fluoreszenzemission erfolgt, die Dauer der Aus-Zustände, in denen keine Fluoreszenzemission erfolgt, und die durchschnittliche Anzahl von Fluoreszenzphotonen, die während der Dauer eines Ein-Zustands emittiert wird, hängen dabei stark von der Art des jeweiligen Fluorophors ab und eignen sich daher ebenfalls als Parameter zur Unterscheidung verschiedener Fluorophore. Entsprechend kann eine Identifizierung der Referenzmarker in der Probe und eine Unterscheidung von anderen Lichtquellen in der Probe auch auf Basis dieser Parameter erfolgen.

Zum Auffinden der Referenzmarker kann gegebenenfalls auch ausgenutzt werden, dass die Referenzmarker eine weitgehend kontinuierliche Lichtemission erzeugen und ortsfest sind; dagegen kann die Fluoreszenz aus der Probe stärkeren zeitlichen Änderungen unterliegen. Insbesondere, wenn die Probe mit einem MINFLUX-Verfahren untersucht wird, sind zu verschiedenen Zeitpunkten unterschiedliche Gruppen von räumlich einzelnen Farbstoffmolekülen zur Lokalisierung aktiviert. Dadurch fluktuiert die Fluoreszenz in der Probe erheblich. Zu Fluktuationen in der Fluoreszenz kann es aber auch durch Dunkelzustände und / oder durch Bewegungen von mit Fluoreszenzmarkern markierten Strukturen in der Probe kommen. Unter diesen Umständen können die Referenzmarker durch Korrelation mehrerer, in zeitlicher Folge aufgenommener Bilder der Probe identifiziert werden, da sich die Lichtemissionen der Referenzmarker aufaddieren, während die Fluoreszenzintensität der anderen Quellen einer Mittelung unterliegt und relativ zum Signal der Referenzmarker schwächer wird. Für zwei (Graustufen-)Bilder $f_1$ und $f_2$ mit den Pixelindizes $i$ und $j$ lässt sich die Korrelationsamplitude $r_{ij}$ gemäß folgender Formel berechnen:

$$r_{ij} = \frac{\sum_{m,n}\left[f_1(m+i, n+j) - \overline{f_1}\right]\left[f_2(m,n) - \overline{f_2}\right]}{\sqrt{\sum_{m,n}\left[f_1(m,n) - \overline{f_1}\right]^2 \sum_{m,n}\left[f_2(m,n) - \overline{f_2}\right]^2}}$$

Hier sind $\overline{f}_1$ und $\overline{f}_2$ die mittleren Grauwerte der Bilder $\overline{f}_1$ und $\overline{f}_2$, die Summationen erfolgen über alle Pixel der Bilder. Die Korrelation kann in analoger Weise auch für mehr als zwei Bilder berechnet werden. Die Referenzmarker können durch Schwellwertbildung aus der Korrelationsamplitude $r_{ij}$ und ggf. weitere, z.B. morphologische Kriterien wie Form und / oder Größe identifiziert werden.

Wenngleich das erfindungsgemäße Verfahren mit nur einem einzigen Referenzmarker, dessen Position wiederholt bestimmt wird, durchführbar ist, so ist es in der Praxis meist vorteilhaft, die Positionsbestimmung an mehreren Referenzmarkern vorzunehmen. Wenn die Drift von mehreren Referenzmarkern parallel und separat erfasst wird, kann durch Mittelwertbildung die Genauigkeit der Driftbestimmung verbessert werden. Außerdem wird das Verfahren robuster dahingehend, dass das Untersuchen der Probe auch dann fortgesetzt werden kann, wenn ein oder mehrere Referenzmarker für weitere Positionsbestimmungen ausfallen, beispielsweise infolge von Fotobleichen. Auch kann durch Vergleich der Positionsbestimmungen mehrerer Referenzmarker erkannt werden, wenn sich ein Referenzmarker von seiner Bindestelle ablöst und sich gegenüber der Probe und den anderen Referenzmarkern bewegt. Eine unabhängige Positionsbestimmung mehrerer Referenzmarker erlaubt es weiterhin, die Drift eines (beliebigen) Punktes in der Probe aus der Drift mehrerer Referenzmarker durch Interpolation zu bestimmen. Dadurch kann nicht nur eine korrelierte Driftbewegung der gesamten Probe oder eines Objekts in der Probe, sondern auch eine morphologische Verformung eines Objekts in der Probe erfasst und korrigiert werden.

Auch wenn die Driftbestimmung parallel an mehreren Referenzmarkern vorgenommen wird, müssen nicht notwendigerweise die Positionen aller dieser Referenzmarker bei jedem Unterbrechen der Probenuntersuchung bestimmt werden; es ist ebenso möglich, mehrere Referenzmarker wechselweise zu lokalisieren. Dabei können die Positionen der anderen, jeweils nicht lokalisierten Referenzmarker unter Nutzung der Positionsbestimmungen derjenigen Referenzmarker extrapoliert werden, für die eine Positionsbestimmung vorgenommen wurde. Auf diese Weise können die nicht lokalisierten Referenzmarker für nachfolgende Positionsbestimmungen im Fangbereich des MINFLUX-Lokalisierung gehalten werden.

Bei der wechselweisen Positionsbestimmung unterschiedlicher Referenzmarker können diese in einer festgelegten Reihenfolge oder in zufälliger Abfolge lokalisiert werden. In einer besonders vorteilhaften Ausführungsform des Verfahrens wird der zu lokalisierende Referenzmarker jedoch situationsabhängig auf Basis der letzten Beleuchtungsposition des fokussierten Laserlichts gewählt. Dabei kann der jeweils nächstliegende Referenzmarker ausgewählt werden oder auch ein Referenzmarker, dessen Abstand von der letzten Beleuchtungsposition einen zuvor festgelegten Betrag von bevorzugt 30 $\mu$m, weiter bevorzugt 20 $\mu$m und besonders bevorzugt 10 $\mu$m nicht übersteigt. Bei dieser Ausführungsform werden die Ausschläge der Strahlablenkung minimiert, so dass kurze Positionierzeiten des fokussierten Laserlichts in der Probe resultieren und der Zeitaufwand für die Positionsbestimmung der Referenzmarker gering gehalten wird.

Die Markierung der Probe mit den Referenzmarkern kann auf vielfältige Art und Weise erfolgen. In einer bevorzugten Ausführungsform des erfindungsgemäßen Verfahrens erfolgt die Markierung der Probe durch Anbringen von Referenzmarkern an oder in einem Probenträger, insbesondere einem Objektträger oder einem Deckglas. Hierzu werden fluoreszierende oder lichtstreuende Nanopartikel an die Oberfläche des Objektträgers oder des Deckglases chemisch gebunden oder durch elektrostatische Wechselwirkungen fixiert, bevor das Präparat auf den Objektträger oder das Deckglas aufgebracht wird. Wenngleich diese Art der Markierung der Probe in der Laborpraxis verbreitet ist, liefern derart präparierte Proben bezüglich der Haftung der Nanopartikel auf der Oberfläche nicht immer zufriedenstellende Ergebnisse. Auch ist die Einstellung der gewünschten Dichte von Nanopartikeln in der Probe und insbesondere deren Reproduzierbarkeit schwierig.

Für die Verwendung in einem erfindungsgemäßen Verfahren bieten sich daher insbesondere auch Objektträger oder Deckgläser an, die bereits bei der Herstellung mit Referenzmarkern versehen werden. Dabei können die Nanopartikel fest mit dem Material des Trägers verbunden oder in dieses sogar eingebettet sein. Als Referenzmarker kommen hierzu aber nicht nur Nanopartikel in Betracht, sondern prinzipiell alle Markierungen, die mit einem MINFLUX-Verfahren in mindestens einer Raumrichtung lokalisiert werden können, also neben punktförmigen auch linienförmige oder sogar flächige, ebene Markierungen. Dabei erlauben punktförmige Markierungen eine Positionsbestimmung in drei Raumrichtungen, geradlinige Markierungen zwei Positionsbestimmungen in senkrecht zu der Linie verlaufenden Richtungen und eine flächige Markierung immerhin noch eine Positionsbestimmung senkrecht zu der Ebene.

Als Referenzmarker geeignet sind auch Strukturen, die mittels einer mechanischen Gravur oder einer Lasermarkierung auf oder in dem Material erzeugt werden und die bei Beleuchtung ein Streuzentrum bilden. Auch durch eine lithographische Strukturierung der Glasoberfläche können lichtstreuende Referenzmarker hergestellt werden. Ein großer Vorteil derart vorbereiteter Probenträger besteht darin, dass die Referenzmarker reproduzierbar in regelmäßigen Anordnungen und definierten Abständen angeordnet werden können, so dass sichergestellt ist, dass sich innerhalb des Abtastbereichs immer auch ein Referenzmarker befindet, dessen Position bestimmt werden kann. Insbesondere ist es durch Lasermarkierung möglich, Strukturen nicht nur an der Oberfläche, sondern auch im Glas zu erzeugen, so dass die Lage der Referenzmarker nicht notwendigerweise auf eine Ebene (die Glasoberfläche) beschränkt ist. Während die Positionsbestimmung der Referenzmarker in z-Richtung, d. h. in Richtung der optischen Achse, auf den Fangbereich der MINFLUX-Lokalisierung begrenzt ist, wenn alle Referenzmarker in derselben Ebene liegen, kann mit in verschiedenen Tiefen angeordneten Referenzmarkern eine Positionsbestimmung von Referenzmarkern über einen wesentlich größeren Bereich realisiert werden.

Mit Markierungen versehene Probenträger sind für andere Zwecke bekannt und teils kommerziell verfügbar. Insofern umfasst die Erfindung nicht nur das beschriebene, und mit verschiedenen Ausführungsformen dargelegte Verfahren, sondern auch die Verwendung eines Referenzmarker aufweisenden Probenträgers in einem erfindungsgemäßen Verfahren.

Alternativ zur Anbringung von Referenzmarkern auf oder in einem Probenträger können Referenzmarker auch an ein Objekt in der Probe, beispielsweise eine Zelle, gekoppelt werden.

Die Referenzmarker sind dann nicht mehr notwendigerweise ortsfest bezüglich der gesamten Probe, sondern bezüglich des Objekts, an das sie gekoppelt sind. In dieser Ausführungsform wird mit der Positionsbestimmung der Referenzmarker nicht mehr nur eine Drift der Probe als Ganzes erfasst, sondern alternativ oder zusätzlich eine Drift oder eine aktive Bewegung des Objekts bzw. der Zelle, an die die Referenzmarker gekoppelt sind. In vielen Anwendungen, in denen Strukturen innerhalb einer Zelle untersucht werden, ist dies die bevorzugte Ausführungsform des Verfahrens, da sich passive und aktive Bewegungen der Zelle ebenso störend auf die Untersuchung auswirken wie eine Drift der gesamten Probe. Diese Ausführungsform des Verfahrens erlaubt es zudem, nicht nur eine koordinierte Bewegung der Probe oder der Zelle als Drift zu erfassen, sondern auch aufgrund von Wachstums- oder Zellteilungsprozessen während der Untersuchung auftretende morphogische Veränderungen, beispielsweise Streckungen oder Stauchungen. Dazu kann die Drift an einer beliebigen Position in der Probe aus der Drift mehrerer, in der Umgebung der jeweiligen Position befindlicher Referenzmarker durch Interpolation bestimmt werden. Die Referenzmarker bilden dann ein (sich zeitlich veränderndes) zwei- oder dreidimensionales Netzraster (engl. *Mesh),* auf dem mittels *Warping*-Algorithmen Koordinaten von Punkten zwischen den Netzrasterpunkten interpoliert werden können.

In besonderen Fällen kann ein Objekt in der Probe auch intrinsische, als Referenzmarker geeignete Partikel aufweisen. Ein Beispiel hierfür sind die beim Hämoglobin-Abbau durch den Malaria-Erreger *Plasmodium falciparum* entstehenden Hämozoin-Pigmente, die in infizierten Erythrozyten zu finden sind. Diese Pigmente sind doppelbrechend, weswegen sich zur Positionsbestimmung der Pigmente insbesondere ein Polarisationskontrast eignet.

Die Erfindung umfasst neben dem in verschiedenen Ausführungsformen beschriebenen erfindungsgemäßen Verfahren auch ein Lichtmikroskop mit einem Objektiv, einer Lichtquelle für das Abtastlicht, Strahlformungsmitteln zur Ausbildung einer ein lokales Intensitätsminimum aufweisenden Intensitätsverteilung des Abtastlichts in einer Probe, einer Abtastvorrichtung zur Positionierung des Abtastlichts in der Probe und einem Detektor zur Erfassung einer Lichtemission von Referenzmarkern in der Probe. Das Lichtmikroskop ist dadurch gekennzeichnet, dass es eine Steuereinheit aufweist, die dazu eingerichtet ist, ein erfindungsgemäßes Verfahren auszuführen. Zur Korrektur der an einem Referenzmarker bestimmten Drift der Probe weist das Lichtmikroskop bevorzugt einen Probentisch mit einem Antrieb auf, mit dem die Drift der Probe durch Nachführen kompensiert werden kann.

Vorteilhafte Weiterbildungen der Erfindung ergeben sich aus den Patentansprüchen, der Beschreibung und den Zeichnungen und den zugehörigen Erläuterungen zu den Zeichnungen.

Die beschriebenen Vorteile von Merkmalen und / oder Merkmalskombinationen der Erfindung sind lediglich beispielhaft und können alternativ oder kumulativ zur Wirkung kommen.

Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen

Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

**Kurzbeschreibung der Figuren**

**Fig.** 1     zeigt eine Ausführungsform des erfindungsgemäßen Verfahrens in einem Ablaufdiagramm.

**Fig. 2**    zeigt eine weitere Ausführungsform des erfindungsgemäßen Verfahrens in einem Ablaufdiagramm.

**Fig. 3**    zeigt eine weitere Ausführungsform des erfindungsgemäßen Verfahrens in einem Ablaufdiagramm.

**Fig. 4**    zeigt eine schematische Darstellung eines erfindungsgemäßen Verfahrens.

**Fig. 5**    zeigt eine Driftbestimmung durch Interpolation aus den Positionen mehrerer Referenzmarker.

**Fig. 6**    zeigt einen Probenträger zur Verwendung in einem erfindungsgemäßen Verfahren.

**Fig. 7**    zeigt ein erfindungsgemäßes Lichtmikroskop gemäß einer ersten Ausführungsform.

**Fig. 8**    zeigt ein erfindungsgemäßes Lichtmikroskop gemäß einer zweiten Ausführungsform.

**Beschreibung der Figuren**

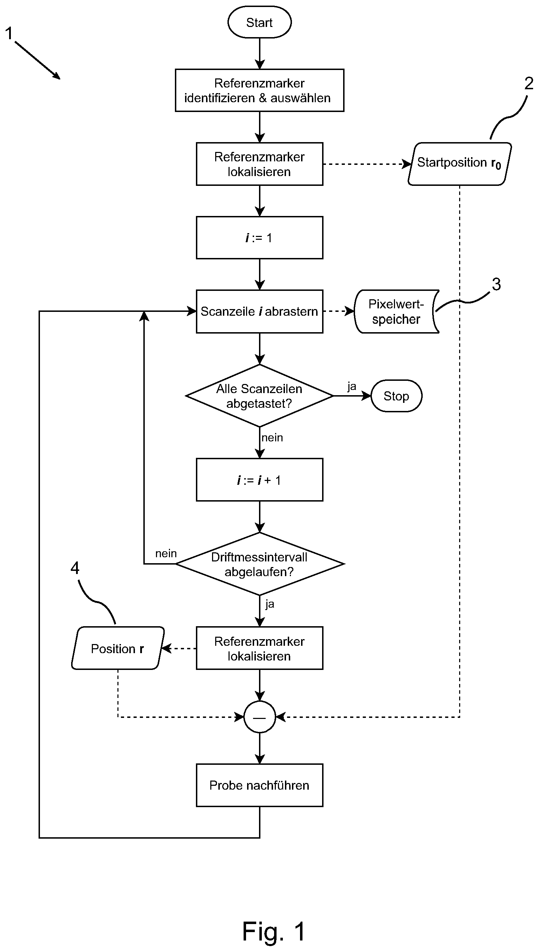

In **Fig. 1** ist ein Ablaufdiagramm 1 einer Ausführungsform des erfindungsgemäßen Verfahrens gezeigt, bei dem das Untersuchen der Probe durch ein Laserscanning-Verfahren erfolgt, beispielsweise mittels konfokaler oder STED-Mikroskopie. Die Probe bzw. eine interessierende Struktur in der Probe ist dazu mit einem Fluoreszenzmarker angefärbt. In dem Ablaufdiagramm 1 kennzeichnen gestrichelte Linien den Fluss von Daten.

Zu Beginn wird ein Referenzmarker in der Probe identifiziert, an dem die Driftbestimmung durch wiederholte Positionsbestimmung während des Untersuchens der Probe vorgenommen werden soll. Ein Referenzmarker kann beispielsweise in einem Übersichtsbild der Probe anhand einer charakteristischen Form oder einer spezifischen Lichtemission identifiziert und seine Position in der Probe zumindest näherungsweise bestimmt werden. Metallische Nanopartikel beispielsweise sind in einem Auflichtbild der Probe anhand ihrer hellen, punktförmigen Streulichtsignale erkennbar.

Ein solches Auflichtbild kann z. B. mit einem Raster-Fluoreszenzbild der Probe überlagert werden, so dass aus der Überlagerung die Position der Referenzmarker relativ zu Strukturen der Probe dargestellt wird. Aus diesem Bild kann ein Benutzer beispielsweise einen oder mehrere Referenzmarker auswählen, welche zur Driftbestimmung verwendet werden sollen. Eine derartige Auswahl kann z.B. durch Markieren von Bereichen auf einer graphischen Benutzeroberfläche erfolgen, z.B. durch Definieren und Verschieben eines Rahmens per Maus oder durch Touchscreen-Interaktion.

Wenn der Referenzmarker ausgewählt ist, wird seine Position erstmalig mit einem MINFLUX-Verfahren bestimmt, um eine Startposition $r_0$ 2 zu ermitteln, die als Referenzposition zur Driftermittlung bei späteren Positionsbestimmungen des Referenzmarkers dient. Das anschließende Untersuchen der Probe erfolgt in der dargestellten Ausführungsform zeilenweise; zu Beginn wird ein Zeilenzähler i auf die erste Scanzeile gesetzt und diese Zeile punktweise abgerastert, wobei für jedes Pixel der Zeile eine Fluoreszenz detektiert und die Intensität der Fluoreszenz in einem Pixelwertspeicher 3 abgelegt wird. Im nächsten Schritt wird geprüft, ob alle Scanzeilen abgerastert wurden, d. h. die Untersuchung der Probe vollständig abgeschlossen ist. In diesem Fall wird das Verfahren beendet, andernfalls wird der Zeilenzähler i inkrementiert.

Im nächsten Schritt wird überprüft, ob eine Positionsbestimmung des Referenzmarkers und eine Driftkorrektur erfolgen soll, wozu die seit der letzten Positionsbestimmung des Referenzmarkers vergangene Zeit bestimmt wird. Sofern ein (vorab festgelegtes) Driftmessintervall erreicht ist, wird eine erneute Positionsbestimmung des Referenzmarkers nach einem MINFLUX-Verfahren vorgenommen. Alternativ kann die Positionsbestimmung des Referenzmarkers auch nach einer vorgegebenen Anzahl abgerasteter Scanzeilen wiederholt werden.

Aus der Differenz der aktuellen Position **r** 4 und der Startposition $r_0$ 2 des Referenzmarkers wird eine Driftkorrektur berechnet, um die die Probe nachgeführt wird, so dass die Drift auskorrigiert wird; anschließend wird das Untersuchen der Probe mit dem Abrastern der nächsten Scanzeile i fortgesetzt.

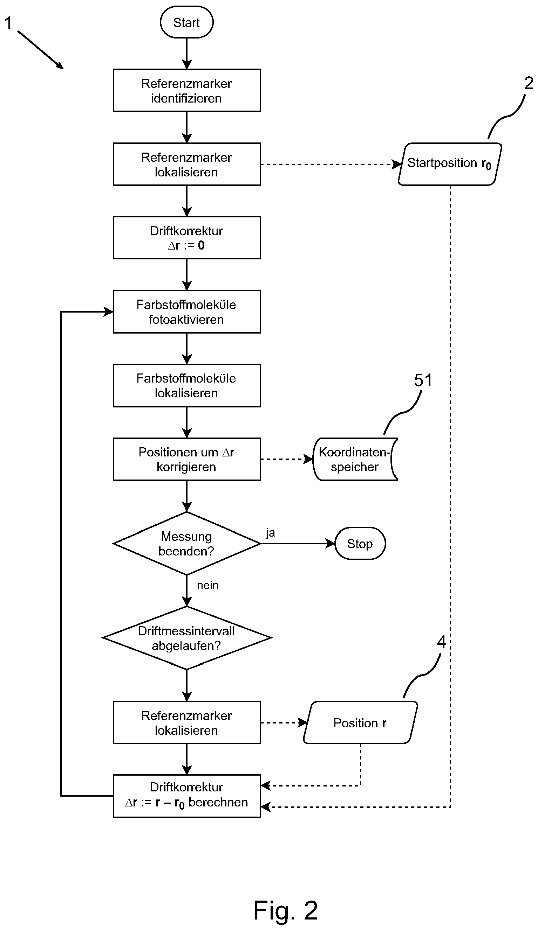

In **Fig. 2** ist ein Ablaufdiagramm 1 einer Ausführungsform des erfindungsgemäßen Verfahrens gezeigt, bei dem das Untersuchen der Probe anders als in der zuvor dargestellten Ausführungsform mit einem MINFLUX-Verfahren erfolgt. Dazu ist die Probe bzw. eine interessierende Struktur in der Probe mit einem Fluoreszenzfarbstoff markiert, der lichtinduziert zwischen einem fluoreszenten Zustand und einem nichtfluoreszenten Dunkelzustand in mindestens einer Richtung überführbar ist.

Wie zuvor wird zu Beginn der Untersuchung ein Referenzmarker in der Probe identifiziert, an dem die Driftbestimmung durch wiederholte Positionsbestimmung vorgenommen werden soll, und seine Position wird erstmalig mit einem MINFLUX-Verfahren bestimmt, um eine Startposition $r_0$ 2 zu ermitteln. Die Driftkorrektur $\Delta r$ wird mit dem Wert 0 initialisiert.

Im nächsten Schritt wird nun (nur) eine geringe Zahl von Molekülen des Fluoreszenzfarbstoffs, mit denen die Probe markiert ist, durch Fotoaktivierung in den fluoreszenten Zustand überführt. Die Dichte der fluoreszenten Farbstoffmoleküle wird dabei so eingestellt, dass sich in einem beugungsbegrenzten Volumen jeweils nur höchstens ein fluoreszentes Farbstoffmolekül befindet.

Im nächsten Schritt erfolgt die Lokalisierung der zuvor fotoaktivierten Farbstoffmoleküle nach einem MINFLUX-Verfahren. Die Lokalisierung umfasst dabei eine initiale Bestimmung der ungefähren Positionen der Farbstoffmoleküle als Positionsstartwerte, die durch systematisches Abtasten der Probe (oder eines Ausschnitts der Probe) oder durch Aufnahme eines Epifluoreszenzbilds der Probe bestimmt werden können. Beginnend an dem jeweiligen Lokalisierungsstartwert eines Farbstoffmoleküls wird dessen Position nach der MINFLUX-Methode schrittweise mit steigender Genauigkeit lokalisiert, wozu das Farbstoffmolekül mit einer ein lokales Minimum aufweisenden Intensitätsverteilung von Anregungslicht an mehreren Abtastpositionen abgetastet und aus an diesen Abtastpositionen detektierten Fluoreszenzintensitäten eine verbesserte Position r des Farbstoffmoleküls bestimmt wird. In dieser Ausführungsform des erfindungsgemäßen Verfahrens werden die Positionen der Farbstoffmoleküle im Anschluss um den Wert der Driftkorrektur $\Delta$r korrigiert und dann in einem Koordinatenspeicher 51 abgelegt.

Sofern eine ausreichende Zahl von Einzelmolekül-Lokalisierungen erreicht ist, kann die Messung an dieser Stelle abgebrochen und beendet werden. Als Abbruchkriterium können verschiedene Kriterien dienen; beispielsweise kann die Messung beendet werden, wenn eine vorab festgelegte oder festlegbare Anzahl von Einzelmoleküllokalisierungen erfolgt oder ein vorgegebenes Signalzu-Rausch-Verhältnis erreicht ist. Es ist auch möglich, die Messung interaktiv durch den Bediener beenden zu lassen.

Wie in der zuvor beschriebenen Ausführungsform wird nun überprüft, ob eine Positionsbestimmung des Referenzmarkers und eine Driftkorrektur erfolgen soll, wozu die seit der letzten Positionsbestimmung des Referenzmarkers vergangene Zeit bestimmt wird. Sofern ein (vorab festgelegtes) Driftmessintervall erreicht ist, wird eine erneute Positionsbestimmung des Referenzmarkers nach einem MINFLUX-Verfahren vorgenommen. Aus der Differenz der aktuellen Position r 4 und der Startposition $\mathbf{r}_0$ 2 des Referenzmarkers wird eine aktualisierte Driftkorrektur $\Delta$r berechnet. Anschließend wird das Untersuchen der Probe fortgesetzt, indem erneut eine geringe Zahl von Farbstoffmolekülen fotoaktiviert und lokalisiert wird.

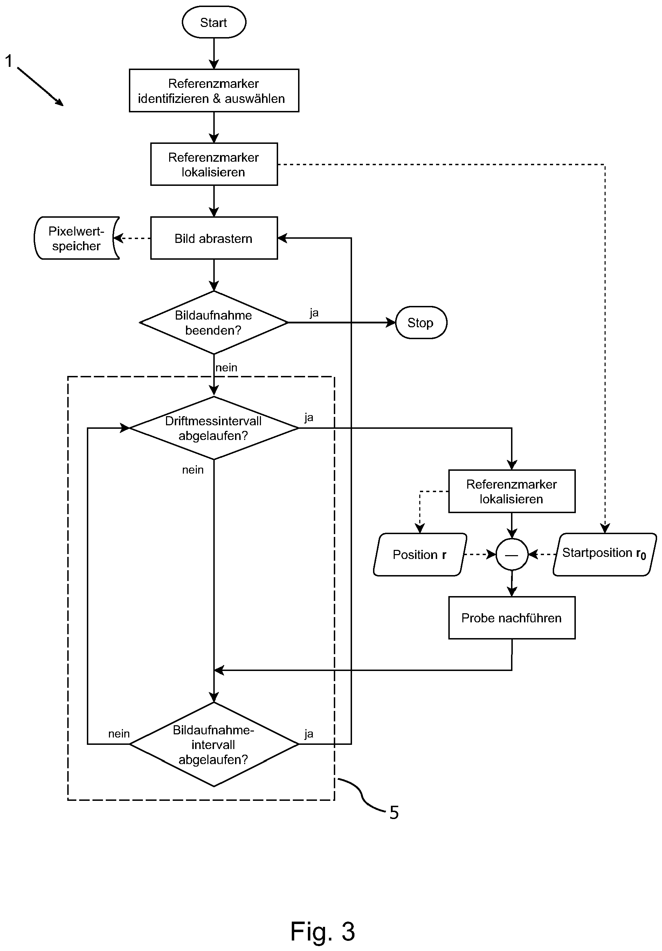

In **Fig. 3** ist das Ablaufdiagramm 1 einer weiteren Ausführungsform des erfindungsgemäßen Verfahrens dargestellt. Wie in der in **Fig. 1** dargestellten Ausführungsform wird die Probe auch hier mit einem Laserscanning-Verfahren untersucht, beispielsweise mittels konfokaler oder STED-Mikroskopie. Die hier gezeigte Ausführungsform des Verfahrens bietet sich für wiederholte Untersuchungen der Probe über ausgedehnte Zeiträume von Stunden oder sogar Tagen an. Dabei ist die Driftbestimmung wiederum in die Probenuntersuchung integriert, erfolgt hier allerdings nicht zwischen aufeinanderfolgenden Bildzeilen, sondern während der Pausen zwischen aufeinanderfolgenden Aufnahmen eines Bildes oder Bildstapels der Probe. Dazu wird jeweils nach der Bildaufnahme geprüft, ob das Driftmessintervall abgelaufen ist. Ist dies der Fall, erfolgt wie in **Fig. 1** gezeigt eine Driftbestimmung an den Referenzmarkern und eine Nachführung der Probe. Das Driftmessintervall kann vorab festgelegt oder festlegbar sein oder dynamisch aus den zuvor bestimmten Driftwerten bestimmt werden. Anschließend wird eine Warteschleife 5 durchlaufen, bis das Bildaufnahmeintervall abgelaufen ist; dann wird eine erneute Bildaufnahme gestartet. Während des wiederholten Durchlaufens der Warteschleife wird weiter überprüft, ob das Driftmessintervall abgelaufen ist und ggf. eine weitere Driftbestimmung und Probennachführung vorgenommen.

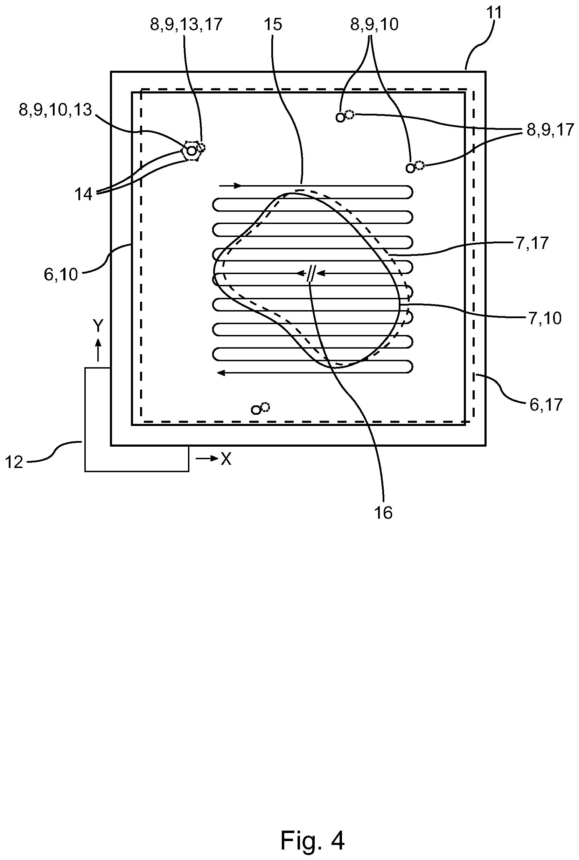

In **Fig. 4** ist das erfindungsgemäße Verfahren schematisch dargestellt. Eine Probe 6 enthält eine zu untersuchende Zelle 7 sowie Referenzmarker 8, hier in Form lichtstreuender, metallischer Nanopartikel 9. Die Untersuchung der Zelle 7 erfolgt mittels konfokaler Laserscanningmikroskopie, d. h. durch ein hier mäanderförmig ausgeführtes zeilenweises Abrastern der Zelle 7 mit fokussiertem Laserlicht. Die Probe 6 ist an einer Ausgangsposition 10 auf einem Probentisch 11 mit einem Antrieb 12 angeordnet, mit dem die Probe 6 in x- und y-Richtung bewegt werden kann. Sofern eine Driftkorrektur in drei Raumrichtungen erfolgen soll, ist eine zusätzliche Verstellmöglichkeit in der senkrecht zur Zeichenebene stehenden z-Richtung vorzusehen.

Zu Beginn werden die Referenzmarker 8 in der Probe 6 identifiziert und einer dieser Referenzmarker 13 zur Durchführung der Driftbestimmung ausgewählt. Die Auswahl erfolgt dabei bevorzugt so, dass der Referenzmarker 13 in der Nähe, nicht aber innerhalb des zu untersuchenden Bereichs der Probe 6 liegt. Es erfolgt nun eine erste MINFLUX-Lokalisierung des Referenzmarkers 13, wozu dieser mit einer ein lokales Minimum aufweisenden Intensitätsverteilung von Abtastlicht an mehreren, dicht um den Marker angeordneten Abtastpositionen 14 (von denen hier nur zwei exemplarisch mit Bezugszeichen versehen sind) beleuchtet und aus den an den Abtastpositionen 14 registrierten Streulichtintensitäten eine genaue Lokalisierung des Referenzmarkers 13 vorgenommen wird. Diese erste Lokalisierung definiert die Ausgangsposition 10 des Referenzmarkers 13 und damit der Probe 6 bzw. der Zelle 7 in der Probe 6. Anschließend erfolgt die Bildaufnahme der Zelle 7 mittels Rasterscanning, wozu die Probe 6 beginnend mit der ersten Scanzeile 15 zeilenweise - hier mäanderförmig - abgerastert wird. Sobald die seit der ersten bzw. der letzten Positionsbestimmung verstrichene Zeit das Driftmessintervall erreicht hat, erfolgt eine Unterbrechung 16 des Rasterscanning, und es wird eine erneute MINFLUX-Lokalisierung des Referenzmarkers 13 vorgenommen, die eine bezüglich der Ausgangsposition 10 gedriftete Position 17 des Referenzmarkers 13 liefert. Zur Korrektur wird die Probe nun mit Hilfe des Antriebs 12 des Probentischs 11 um die Differenz der gedrifteten Position 17 und der Ausgangsposition 10 nachgeführt. Anschließend wird die Bildaufnahme mittels Rasterscanning fortgesetzt.

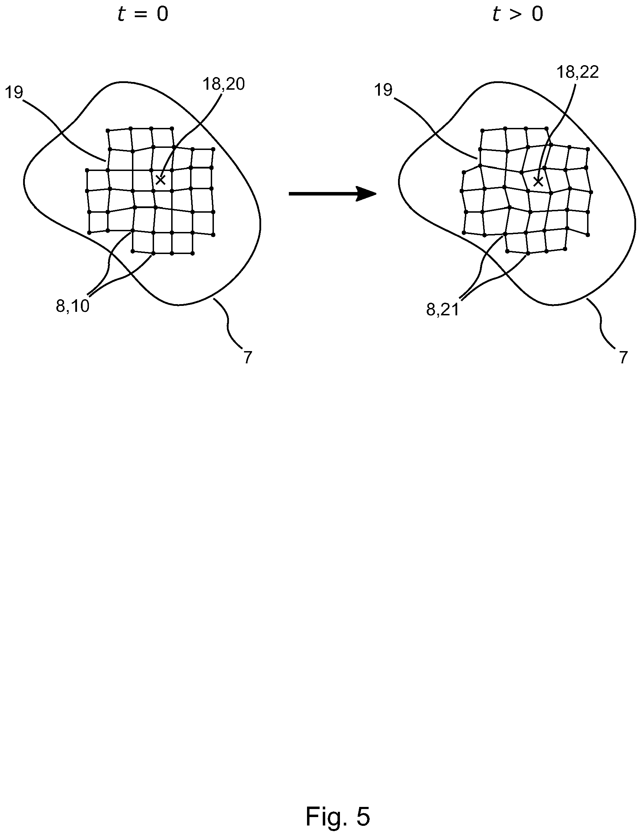

In **Fig. 5** ist skizziert, wie die Drift eines beliebigen Punkts 18, dessen Position selbst nicht durch eine MINFLUX-Lokalisierung bestimmbar ist, durch Interpolation aus den Positionen mehrerer Referenzmarker 8 bestimmt werden kann. Hierzu ist die Zelle 7 mit mehreren Referenzmarkern 8 markiert, die in dem gezeigten Beispiel entlang eines annähernd regelmäßigen Rasters 19 angeordnet sind. (Der Übersichtlichkeit halber sind in der Figur nur zwei der Referenzmarker exemplarisch mit Bezugszeichen versehen.) Zu Beginn der Untersuchung, d. h. zum Zeitpunkt $t = 0$ befinden sich die Referenzmarker 8 in Ausgangspositionen 10, die durch eine erste MINFLUX-Lokalisierung aller Referenzmarker 8 vor Beginn der Untersuchung bestimmt werden. Die Ausgangsposition 20 des Punkts 18 in der Probe, dessen Drift über den Untersuchungszeitraum hinweg korrigiert werden soll, wird relativ zu den Ausgangspositionen 10 der den Punkt 18 umgebenden Referenzmarker 8 durch Interpolation festgelegt.

Zu einem späteren Zeitpunkt $t > 0$ während der Untersuchung der Probe hat eine Verformung der Zelle 7 stattgefunden, beispielsweise infolge von Wachstum der Zelle 7. Dadurch haben sich die Positionen 21 der Referenzmarker 8 verändert, wobei die Positionsänderungen nicht gleichförmig sind, sondern sich von Referenzmarker 8 zu Referenzmarker 8 unterscheiden können. Eine erneute MINFLUX-Lokalisierung der Referenzmarker 8 (oder zumindest der den Punkt 18 umgebenden Referenzmarker) liefert nun einen Satz von Positionen, aus denen die veränderte Position 22 des Punkts 18 interpoliert werden kann.

Das zur Lokalisation der Referenzmarker durchgeführte MINFLUX-Verfahren kann (gegebenenfalls nach der Auswahl der Referenzmarker aus einem Übersichtsbild, z.B. einer Überlagerung aus einem Auflichtbild, das die groben Positionen der Referenzmarker anzeigt und einem Raster-Fluoreszenzbild der mit Fluoreszenzmarkern markierten Probenstrukturen) einen Vorlokalisationsschritt umfassen, bei dem eine initiale Positionsschätzung eines Referenzmarkers ermittelt wird. Dazu kann beispielsweise eine Projektion der Detektorlochblende in der Probenebene kreisförmig verschoben werden, während die Anregungslichtverteilung relativ zur Probe stationär bleibt (sogenannter Pinhole-Orbit). Auf diese Weise kann die initiale Positionsschätzung des Referenzmarkers in lateraler Richtung, also in der Probenebene senkrecht zur optischen Achse des Anregungslichtstrahls bestimmt werden. Anschließend kann ein sogenanntes 2D-MINFLUX-Verfahren zur genauen Lokalisierung des Referenzmarkers durchgeführt werden.

Ist eine 3D-Lokalisation des Referenzmarkers erforderlich (was typischerweise der Fall ist, wenn auch die mit Fluoreszenzfarbstoffen markierten Strukturen in der Probe dreidimensional abgebildet werden sollen), muss unter Umständen ein anderes Vorlokalisationsverfahren angewendet werden, da das Pinhole-Orbit-Verfahren keine Information über die axiale Position des Referenzmarkers liefert. Beispielsweise kann zur 3D-Vorlokalisation, insbesondere von lichtstreuenden Referenzmarkern, die Konvergenz der Positionsschätzung ausgehend von der initialen Position der Anregungslichtverteilung genutzt werden. Dazu kann z.B. eine Vielzahl von iterativen MINFLUX-Lokalisationssequenzen auf einer Punktwolke um die aus dem Übersichtsbild geschätzte Position des Referenzmarkers durchgeführt werden. Bei der Lokalisationssequenz wird zunächst das zentrale Minimum der Anregungslichtverteilung nacheinander an den Punkten eines Beleuchtungsmusters platziert, die um einen zufälligen Punkt der Punktwolke angeordnet sind und die Photonenzahlen werden für jeden Punkt bestimmt. Daraus wird eine neue Positionsschätzung berechnet und im nächsten Schritt wird das Beleuchtungsmuster um die neue Positionsschätzung herum angeordnet. Diese Sequenz wird für jeden der Punkte durchgeführt, bis die Positionsschätzung divergiert (was der Fall ist, wenn der Anfangspunkt außerhalb des Fangbereichs des Referenzmarkers liegt) oder konvergiert (falls der Anfangspunkt im Fangbereich liegt). Je näher die Position des Anfangspunktes an der tatsächlichen Position des Referenzmarkers liegt, desto schneller konvergiert diese Positionsschätzung. Aus den Verläufen der Lokalisierungssequenzen, lässt sich der Referenzmarker vorlokalisieren, und zwar bei Verwendung eines 3D-Beleuchtungsmusters und einer dreidimensionalen Punktwolke von Anfangspunkten sowohl lateral als auch axial. Anschließend kann dann ein 3D-MINFLUX-Verfahren angewendet werden, um die Position des Referenzmarkers mit hoher Auflösung zu bestimmen.

Bei dem beschriebenen Vorlokalisationsverfahren sind insbesondere wegen der geringeren Effektivität deutlich mehr Lokalisationsschritte erforderlich als bei dem MINFLUX-Verfahren zur Lokalisation der Probenstrukturen. Die dabei auftretende stärkere Belichtung der Referenzmarker ist wegen ihrer hohen Fotostabilität tolerierbar. Aufgrund des zusätzlichen Zeitbedarfs wird die 3D-Vorlokalisationsmethode insbesondere nur bei der initialen Positionsbestimmung des Referenzmarkers durchgeführt, während bei weiteren Positionsbestimmungen im Rahmen der Driftermittlung insbesondere keine Vorlokalisation sondern direkt ein 3D-MINFLUX-Verfahren zur Anwendung kommt. Für das 3D-MINFLUX-Verfahren bei den nachfolgenden Messungen kann insbesondere statt einer Vorlokalisation die im jeweils vorangegangenen Schritt bestimmte Position des Referenzmarkers als Startwert verwendet werden.

Für die beschriebene Vorlokalisation aus der Konvergenz der Positionsschätzungen ist insbesondere anders als bei herkömmlichen MINFLUX-Verfahren keine Vorabinformation über das Hintergrundsignal erforderlich. Um die Robustheit und die Schnelligkeit der Konvergenz zu verbessern, kann das verwendete Beleuchtungsmuster jedoch insbesondere eine zentrale Position umfassen, die genau der vorangegangenen Positionsschätzung entspricht, wobei das Hintergrundsignal durch die an dieser zentralen Position detektierte Photonenzahl (insbesondere mit einem Faktor skaliert) abgeschätzt wird.

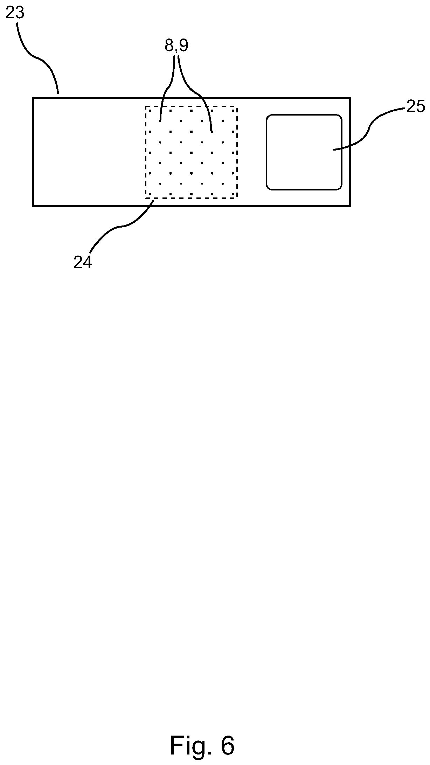

**Fig. 6** zeigt einen aus Glas bestehenden Probenträger 23 mit einem Präparatebereich 24, innerhalb dessen der Probenträger 23 zur Verwendung in einem erfindungsgemäßen Verfahren geeignete Referenzmarker 8 aufweist. Derartige Referenzmarker 8 können beispielsweise lichtstreuende, fixierte metallische Nanopartikel 9 sein; es ist aber auch möglich, Referenzmarker beispielsweise durch eine Lasergravur in Form punktförmiger Streulichtzentren an der Oberfläche oder im Glasvolumen zu erzeugen. Im gezeigten Beispiel weist der Probenträger im Präparatebereich eine regelmäßige, hexagonale Anordnung von Referenzmarkern 8 auf. Der Probenträger 23 kann weitere Merkmale wie z. B. einen Beschriftungsfeld 25 aufweisen.

Im Präparatebereich 24 kann auf dem Probenträger 23 eine zu untersuchende Probe aufgebracht werden. Dabei ist es bevorzugt, dass die Probe auf der Oberfläche des Probenträgers 23 fixiert wird, um eine feste Ortsbeziehung zu den Referenzmarkern 8 sicherzustellen. Man kann Zellen beispielsweise auf der Oberfläche der Probenträgers 23 aufwachsen lassen, oder sie können chemisch auf der Glasoberfläche fixiert werden.

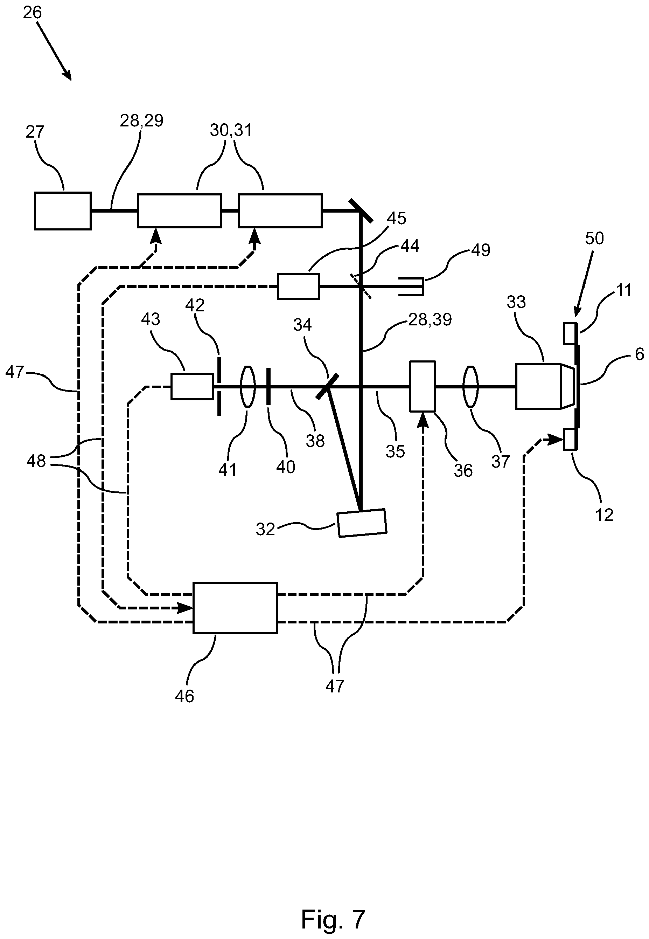

**Fig. 7** zeigt schematisch den Aufbau eines Lichtmikroskops 26 zur Durchführung des erfindungsgemäßen Verfahrens. Die Lichtquelle 27 stellt Abtastlicht 28 bereit, das einerseits eine Fluoreszenzanregung in der Probe 6 befindlicher fluoreszenter Partikel bewirkt, andererseits von in der Probe 6 befindlichen, lichtstreuenden Referenzpartikeln gestreut wird.

Der Lichtstrahl 29 des Abtastlichts 28 durchläuft zwei nacheinander geschaltete Strahlablenkeinrichtungen 30, hier ausgeführt als elektrooptische Deflektoren (EOD) 31 zur Ablenkung des Lichtstrahls 29 in der horizontalen bzw. vertikalen Richtung. An dem teildurchlässigen Spiegel 44 wird ein Teil des Abtastlichts 28 aus dem Strahlengang ausgespiegelt; dieser Teilstrahl wird in einer Strahlfalle 49 aufgefangen. Die Wellenfront des an dem teildurchlässigen Spiegel 44 transmittierten Teil des Abtastlichts 28 wird mit einem Flüssigkristallmodulator (Spatial Light Modulator, SLM) 32 so geformt, dass bei der nachfolgenden Fokussierung durch das Objektiv 33 eine ein lokales Intensitätsminimum aufweisende Intensitätsverteilung des Abtastlichts 28 in der Probe 6 resultiert. Der von dem Flüssigkristallmodulator 32 reflektierte Lichtstrahl wird mit einem Strahleinkoppler 34 in einen Hauptstrahlengang 35 des Lichtmikroskops 26 eingekoppelt. Das Abtastlicht 28 wird über einen Scanner 36 und durch eine Scanlinse 37 in die rückwärtige Apertur des Objektivs 33 gelenkt, das das Abtastlicht 28 in die Probe 6 fokussiert, die auf einem Probentisch 11 mit einem Antrieb 12 gehaltert ist. Der Probentisch 11 mit dem Antrieb 12 bilden die Probenpositioniereinheit 50.

In der gezeigten Konfiguration dient der auf Galvanometern basierende Scanner 36 einer vergleichsweise langsamen, aber über ein großes Bildfeld möglichen Grobpositionierung des fokussierten Abtastlichts 28 in der Probe 6, während die EODs 31 der schnellen Positionierung des Intensitätsminimums zur Abtastung der Referenzmarker dienen. Dabei erlauben die EODs 31 eine Positionierung mit hoher Geschwindigkeit, allerdings mit einem auf wenige Mikrometer beschränkten Positionierbereich. Die von dem Objektiv 33 aus der Probe 6 empfangene Fluoreszenz 38 der fluoreszenten Partikel und das Streulicht 39 der Referenzpartikel propagiert entlang des Hauptstrahlengangs 35 in dem Abtastlicht 28 entgegengesetzter Richtung. Die Fluoreszenz 38, die eine gegenüber dem Abtastlicht 28 verschobene Wellenlänge aufweist, passiert den Strahleinkoppler 34, wird mit einem Filter 40 aufgereinigt, mit einer Linse 41 durch eine konfokale Lochblende 42 fokussiert und mit einem hinter der Lochblende 42 angeordneten Fluoreszenzdetektor 43 detektiert. Dagegen weist das von dem Objektiv 33 aus der Probe 6 empfangene Streulicht 39 der Referenzpartikel die gleiche Wellenlänge wie das Abtastlicht 28 auf und wird daher durch den Strahleinkoppler 34 aus dem Hauptstrahlengang 35 ausgespiegelt. Es läuft weiter in dem Abtastlicht 28 entgegengesetzter Richtung und wird durch den teildurchlässigen Spiegel 44 auf den Streulichtdetektor 45 gelenkt.

Erfindungsgemäß verfügt das Lichtmikroskop 26 über eine Steuereinheit 46, die Steuersignale 47 zur Ansteuerung des Scanners 36, der EODs 31 und des Antriebs 12 erzeugt, sowie die Detektorsignale 48 des Fluoreszenzdetektors 43 und Streulichtdetektors 45 empfängt. Die Steuereinrichtung 46 ist eingerichtet, das Abtastlicht 28 mit dem Scanner 36 an einzelnen fluoreszenten Partikeln zu positionieren und einzelne Partikel in der Probe 6 zu lokalisieren, indem diese wiederholt mit dem Abtastlicht 28 in einem Nahbereich abgetastet und ihre Positionen aus den an den Abtastpositionen mit dem Fluoreszenzdetektor 43 detektierten Lichtmengen der Fluoreszenz 38 bestimmt werden. Dabei unterbricht die Steuereinheit 46 periodisch die Lokalisierung der einzelnen fluoreszenten Partikel, um eine Positionsbestimmung mindestens eines Referenzmarkers nach dem MINFLUX-Verfahren vorzunehmen. Dazu wird der Referenzmarker mit dem Abtastlicht an mehreren Abtastpositionen in einem Nahbereich abgetastet und seine Position aus den an den Abtastpositionen mit dem Streulichtdetektor 45 detektierten Lichtmengen des Streulichts 39 berechnet. Die aus der Differenz gegenüber der initialen Position des Referenzmarkers berechnete Drift wird durch gegenläufiges Nachführen der Probe 6 durch Ansteuerung des Antrieb 12 des Probentisches 11 kompensiert.

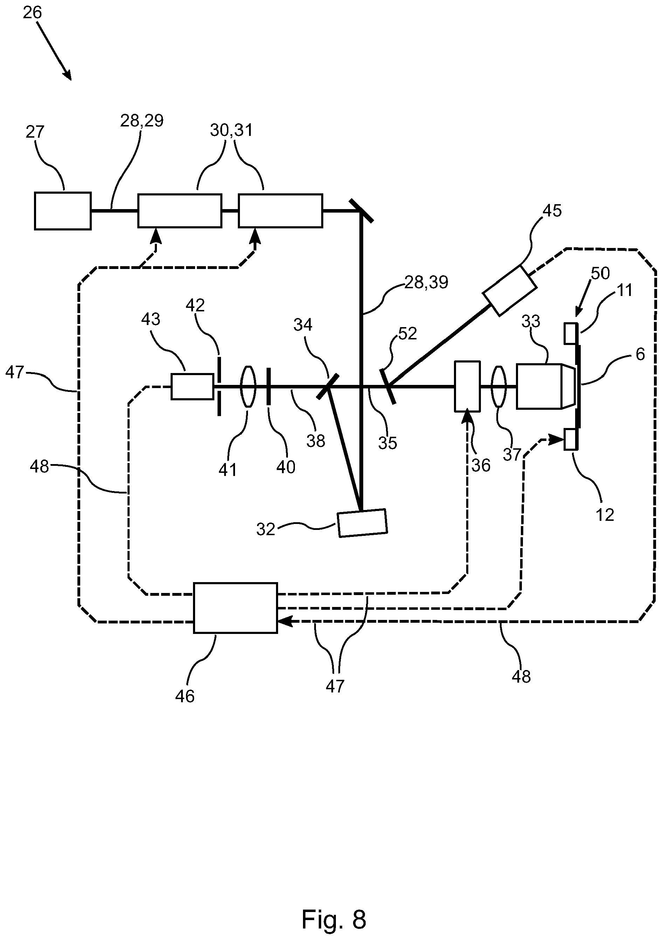

Die in **Fig. 8** gezeigte Ausführungsform des Lichtmikroskop 26 unterscheidet sich von dem in Fig. 7 dargestellten Lichtmikroskop 26 durch die Position des Streulichtdetektors 45 im Strahlengang, sowie insbesondere durch die Art der Auskopplung des Streulichts 39. Gemäß Fig. 8 ist in dem Hauptstrahlengang 35 zwischen dem Strahleinkoppler 34 und dem Scanner 36 ein Strahlteiler 52 angeordnet, der eine reflektierende Oberfläche aufweist, deren Flächennormale unter einem kleinen Winkel (d.h. insbesondere 10° oder weniger, bevorzugt 5° oder weniger, weiter bevorzugt 1° oder weniger) zu der Strahlausbreitungsrichtung in dem Hauptstrahlengang 35 angeordnet ist. Dieser Winkel ist in Fig. 8 zur besseren Übersicht größer dargestellt als in typischen Ausführungen des Lichtmikroskops 26. Durch den Strahlteiler 52 wird ein geringer Anteil (z.B. etwa 5 %) des Streulichts 39 aus dem Hauptstrahlengang ausgekoppelt und auf den Streulichtdetektor 45 gelenkt, der insbesondere als Photomultiplier ausgebildet ist. Da sich der Strahlteiler 52 objektivseitig von dem Strahleinkoppler 34 befindet und der Strahlteiler 52 insbesondere wellenlängenunabhängig Licht reflektiert, wird insbesondere auch ein Teil des Fluoreszenzlichts ausgekoppelt. Allerdings ist dieser Anteil aufgrund des kleinen Winkels des Strahlteilers 52 zum Hauptstrahlengang 35 nur gering.

Der Strahlteiler 52 ist insbesondere als sogenannter *beam sampler* ausgebildet. Dabei handelt es sich um ein Bauteil aus einem Material mit einem höheren Brechungsindex als Luft (z.B. Glas), das eine flache reflektierende Oberfläche (die insbesondere wellenlängen- und polarisationsunabhängig reflektiert) aufweist. Insbesondere ist eine zweite, der reflektierenden Oberfläche gegenüberliegende, Oberfläche mit einer Antireflex-Beschichtung versehen, um eine Strahlverdopplung zu vermeiden. Zusätzlich kann die zweite Oberfläche unter einem kleinen Winkel zu der reflektierenden Oberfläche angeordnet sein, so dass eine Interferenz innerhalb des Bauteils vermieden wird. Alternativ zu einem *beam sampler* kann auch eine beliebige reflektierende Oberfläche, z.B. eines ohnehin im Strahlengang vorhandenen Bauteils zum Auskoppeln des Streulichts verwendet werden, z.B. ein Fenster oder Ähnliches.

Die Anordnung des Strahlteilers 52 nahe des Objektivs 33 ist vorteilhaft, da die Wellenfront des detektierten Streulichts 39 dadurch möglichst wenig durch optische Elemente im Strahlengang (z.B. den Flüssigkristallmodulator 32) verzerrt wird, was die Positionsbestimmung der Referenzmarker verbessert.

Um eine besonders platzsparende und kostengünstige Anordnung zu erhalten, kann eine ohnehin im Hauptstrahlengang 35 vorhandene Linse (in Fig. 8 nicht dargestellt) zur Fokussierung des Streulichts 39 auf den Streulichtdetektor 45 verwendet werden. D.h. der Strahlteiler 52 wird nicht im kollimierten Strahlengang angeordnet. Eine solche Linse kann z.B. ein Teil eines optischen Relais bzw. Teleskops sein, das die aktive Oberfläche des Flüssigkristallmodulators 32 in die Pupille des Objektivs 33 abbildet.

**Bezugszeichenliste**

1 Ablaufdiagramm
2 Startposition
3 Pixelwertspeicher
4 Position
5 Warteschleife
6 Probe
7 Zelle
8 Referenzmarker
9 Nanopartikel
10 Ausgangsposition
11 Probentisch
12 Antrieb
13 Referenzmarker
14 Abtastposition
15 Scanzeile
16 Unterbrechung
17 gedriftete Position
18 Punkt
19 Raster
20 Ausgangsposition
21 Position
22 Position
23 Probenträger
24 Präparatebereich
25 Beschriftungsfeld
26 Lichtmikroskop
27 Lichtquelle
28 Abtastlicht
29 Lichtstrahl
30 Strahlablenkeinrichtung
31 elektrooptischer Deflektor (EOD)
32 Flüssigkristallmodulator

33  Objektiv
34  Strahleinkoppler
35  Hauptstrahlengang
36  Scanner
37  Scanlinse
38  Fluoreszenz
39  Streulicht
40  Filter
41  Linse
42  Lochblende
43  Fluoreszenzdetektor
44  teildurchlässiger Spiegel
45  Streulichtdetektor
46  Steuereinheit
47  Steuersignal
48  Detektorsignal
49  Strahlfalle
50  Probenpositioniereinheit
51  Koordinatenspeicher
52  Strahlteiler

## Patentansprüche

1. Verfahren zum lichtmikroskopischen Untersuchen einer mit Referenzmarkern (8, 13) markierten Probe (6) in einem Lichtmikroskop (26), wobei das Untersuchen ein sequenzielles Beleuchten der Probe (6) mit fokussiertem Laserlicht an mehreren Beleuchtungspositionen umfasst, **dadurch gekennzeichnet, dass** das Untersuchen der Probe (6) zwischen dem Beleuchten an den Beleuchtungspositionen wiederholt unterbrochen und die Position (21, 22) mindestens eines Referenzmarkers (13) nach einem MINFLUX-Verfahren bestimmt wird, um die Drift des Referenzmarkers (13) gegenüber einem optischen Abbildungssystem des Lichtmikroskops zu erfassen, wobei der Referenzmarker (13) mit einer ein lokales Minimum aufweisenden Intensitätsverteilung eines eine Lichtemission des Referenzmarkers (13) induzierenden oder modulierenden Abtastlichts (28) an mehreren, in einem Nahbereich um den Referenzmarker (13) angeordneten Abtastpositionen (14) beleuchtet wird.

2. Verfahren nach Anspruch 1, **dadurch gekennzeichnet, dass** die Position (21, 22) des mindestens einen Referenzmarkers (13) aus für die mehreren Abtastpositionen (14) des Abtastlichts (28) detektierten Lichtemissionen des Referenzmarkers (13) berechnet wird.

3. Verfahren nach einem der Ansprüche 1 bis 2, **dadurch gekennzeichnet, dass** das Laserlicht zum Untersuchen der Probe gleichzeitig das Abtastlicht (28) zum Bestimmen der Positionen (21, 22) des mindestens einen Referenzmarkers (8, 13) ist.

4. Verfahren nach einem der Ansprüche 1 bis 3, **dadurch gekennzeichnet, dass** aus den Positionen (21, 22) des mindestens einen Referenzmarkers (13) eine Drift des / der Referenzmarker (8, 13) gegenüber einem optischen Abbildungssystem des Lichtmikroskops (26) berechnet und dass die Drift durch eine Positionskorrektur einer Strahlablenkeinheit oder durch Nachführen der Probe (6) mit einer Probenpositioniereinheit (50) kompensiert wird.

5. Verfahren nach einem der Ansprüche 1 bis 4, **dadurch gekennzeichnet, dass** die Referenzmarker (8, 13) lichtstreuende Nanopartikel, fluoreszente Nanopartikel, fluoreszente Quantenpunkte oder fluoreszente Fehlstellen aufweisende Nanodiamanten sind.

6. Verfahren nach einem der Ansprüche 1 bis 5, **dadurch gekennzeichnet, dass** die Referenzmarker (8, 13) anhand der Wellenlänge ihrer Lichtemission in der Probe (6) aufgefunden und / oder als Referenzmarker (8,13) identifiziert werden.

7. Verfahren nach einem der Ansprüche 1 bis 5, **dadurch gekennzeichnet, dass** die Referenzmarker (8, 13) anhand statistischer Merkmale des Photonenstroms ihrer Lichtemission in der Probe aufgefunden und / oder als Referenzmarker (8,13) identifiziert werden.

8. Verfahren nach einem der Ansprüche 1 bis 5, **dadurch gekennzeichnet, dass** die Referenzmarker (8, 13) durch Korrelation mehrerer Bilder der Probe (6) in der Probe (6) aufgefunden und / oder als Referenzmarker (8,13) identifiziert werden.

9. Verfahren nach einem der Ansprüche 1 bis 8, **dadurch gekennzeichnet, dass** das Untersuchen der Probe (6) durch eine Aufnahme von Bildern der Probe (6) mit einem Laserscanningverfahren erfolgt.

10. Verfahren nach einem der Ansprüche 1 bis 8, **dadurch gekennzeichnet, dass** die Untersuchung der Probe (6) eine Bestimmung von Positionen einzelner, räumlich voneinander getrennter Partikel in der Probe (6) mit einem MINFLUX-Verfahren umfasst.

11. Verfahren nach Anspruch 10, **dadurch gekennzeichnet, dass** aus den Positionen (21, 22) des mindestens einen Referenzmarkers (13) eine Drift des / der Referenzmarker (8, 13) gegenüber einem optischen Abbildungssystem des Lichtmikroskops (26) berechnet wird und dass die nach dem MINFLUX-Verfahren bestimmten Positionen (21, 22) der einzelnen Partikel um einen Betrag der Drift korrigiert werden.

12. Verfahren nach einem der Ansprüche 1 bis 11, **dadurch gekennzeichnet, dass** die Referenzmarker (8, 13) ortsfest bezüglich eines Probenträgers (23) oder an einen Probenträger (23) gebunden oder in einen Probenträger (23) eingebettet sind.

13. Verfahren nach einem der Ansprüche 1 bis 12, **dadurch gekennzeichnet, dass** die Referenzmarker (8, 13) ortsfest bezüglich eines Objekts oder einer Struktur in der Probe (6) sind oder an ein Objekt oder eine Struktur in der Probe (6) gebunden sind.

14. Verwendung eines Probenträgers (23) mit eingravierten, eingebetteten oder an den Probenträger (23) gebundenen Referenzmarkern (8, 13) in einem Verfahren nach einem der Ansprüche 1 bis 13.

15. Lichtmikroskop (26) mit

    - einem Objektiv (33),
    - einer Lichtquelle (27) für Abtastlicht,
    - Strahlformungsmitteln zur Ausbildung einer ein lokales Intensitätsminimum aufweisenden Intensitätsverteilung des Abtastlichts (28) in einer Probe (6),
    - einer Abtastvorrichtung zur Positionierung des Abtastlichts (28) in der Probe (6),
    - einem Detektor zur Erfassung einer Lichtemission von Referenzmarkern (8, 13) in der Probe (6),
    - einer Steuereinheit (46) zur Ansteuerung der Abtastvorrichtung und zur Verarbeitung eines von dem Detektor ausgegebenen Detektorsignals (48),

**dadurch gekennzeichnet, dass** die Steuereinheit (46) dazu eingerichtet ist, ein Verfahren nach einem der Ansprüche 1 bis 13 auszuführen.

## Claims

1. A method for light microscopic examination of a sample (6) marked with reference markers (8, 13) in a light microscope (26), wherein the examination comprises sequential illumination of the sample (6) with focused laser light at a plurality of illumination positions, **characterized in that** the examination of the sample (6) is repeatedly interrupted between the illumination at the illumination positions and the position (21, 22) of at least one reference marker (13) is determined according to a MINFLUX method in order to detect the drift of the reference marker (13) relative to an optical imaging system of the light microscope, wherein the reference marker (13) is illuminated with an intensity distribution of a scanning light (28) inducing or modulating a light emission of the reference marker (13), the intensity distribution comprising a local minimum, at a plurality of scanning positions (14) arranged in a close range around the reference marker (13).

2. The method according to claim 1, **characterized in that** the position (21, 22) of the at least one reference marker (13) is calculated from light emissions of the reference marker (13) detected for the plurality of scanning positions (14) of the scanning light (28).

3. The method according to claim 1 or 2, **characterized in that** the laser light for examining the sample is at the same time the scanning light (28) for determining the positions (21, 22) of the at least one reference marker (8, 13).

4. The method according to one of the claims 1 to 3, **characterized in that** a drift of the reference marker(s) (8, 13) relative to an optical imaging system of the light microscope (26) is calculated from the positions (21, 22) of the at least one reference marker (13), and **in that** the drift is compensated by a position correction of a beam deflection unit or by tracking the sample (6) with a sample positioning unit (50).

5. The method according to one of the claims 1 to 4, **characterized in that** the reference markers (8, 13) are light-scattering nanoparticles, fluorescent nanoparticles, fluorescent quantum dots or nanodiamonds comprising fluorescent defects.

6. The method according to one of the claims 1 to 5, **characterized in that** the reference markers (8, 13) are found in the sample (6) and/or are identified as reference markers (8, 13) by means of the wavelength of their light emission.

7. The method according to one of the claims 1 to 5, **characterized in that** the reference markers (8, 13) are found in the sample and/or identified as reference markers (8, 13) by means of statistical features of the photon flux of their light emission.

8. The method according to one of the claims 1 to 5, **characterized in that** the reference markers (8, 13) are found in the sample (6) and/or identified as reference markers (8, 13) by correlating a plurality of images of the sample (6).

9. The method according to one of the claims 1 to 8, **characterized in that** the examination of the sample (6) is performed by capturing images of the sample (6) using a laser scanning method.

10. The method according to one of the claims 1 to 8, **characterized in that** the examination of the sample (6) comprises a determination of positions of individual, spatially separated particles in the sample (6) using a MINFLUX method.

11. The method according to claim 10, **characterized in that** a drift of the reference marker(s) (8, 13) relative to an optical imaging system of the light microscope (26) is calculated from the positions (21, 22) of the at least one reference marker (13), and **in that** the positions (21, 22) of the individual particles determined according to the MINFLUX method are corrected by an amount of the drift.

12. The method according to one of the claims 1 to 11, **characterized in that** the reference markers (8, 13) are stationary with respect to a sample carrier (23) or are bound to a sample carrier (23) or are embedded in a sample carrier (23).

13. The method according to one of the claims 1 to 12, **characterized in that** the reference markers (8, 13) are stationary with respect to an object or a structure in the sample (6) or are bound to an object or a structure in the sample (6).

14. A use of a sample carrier (23) comprising reference markers (8, 13) engraved, embedded or bonded to the sample carrier (23) in a method according to one of the claims 1 to 13.

15. A light microscope (26) comprising

   - an objective (33),
   - a light source (27) for scanning light,
   - beam shaping means for forming an intensity distribution of the scanning light (28) in a sample (6), the intensity distribution comprising a local intensity minimum,
   - a scanning device for positioning the scanning light (28) in the sample (6),
   - a detector for detecting a light emission from reference markers (8, 13) in the sample (6),
   - a control unit (46) for controlling the scanning device and for processing a detector signal (48) output from the detector,

   **characterized in that** the control unit (46) is configured to perform a method according to one of the claims 1 to 13.

**Revendications**

1. Procédé d'examen au microscope optique d'un échantillon (6) marqué avec des marqueurs de référence (8, 13) dans un microscope optique (26), l'examen comprenant une illumination séquentielle de l'échantillon (6) avec une lumière laser focalisée à plusieurs positions d'illumination, **caractérisé en ce que** l'examen de l'échantillon (6) est interrompu de manière répétée entre l'illumination aux positions d'illumination et **en ce que** la position (21, 22) d'au moins un marqueur de référence (13) est déterminée selon un procédé MINFLUX afin de détecter la dérive du marqueur de référence (13) par rapport à un système d'imagerie optique du microscope optique, le marqueur de référence (13) étant illuminé avec une distribution d'intensité présentant un minimum local d'une lumière de balayage (28) induisant ou modulant une émission de lumière du marqueur de référence (13) à plusieurs positions de balayage (14) disposées dans une zone proche autour du marqueur de référence (13).

2. Procédé selon la revendication 1, **caractérisé en ce que** la position (21, 22) du au moins un marqueur de référence (13) est calculée à partir des émissions de lumière du marqueur de référence (13) détectées pour la pluralité de positions de balayage (14) de la lumière de balayage (28).

3. Procédé selon l'une des revendications 1 à 2, **caractérisé en ce que** la lumière laser pour examiner l'échantillon est en même temps la lumière de balayage (28) pour déterminer les positions (21, 22) du au moins un marqueur de référence (8, 13).

4. Procédé selon l'une des revendications 1 à 3, **caractérisé en ce que,** à partir des positions (21, 22) de l'au moins un marqueur de référence (13), une dérive du / des marqueur(s) de référence (8, 13) par rapport à un système d'imagerie optique du microscope optique (26) est calculé et **en ce que** la dérive est compensée par une correction de position d'une unité de déviation de faisceau ou par un suivi de l'échantillon (6) avec une unité de positionnement d'échantillon (50).

5. Procédé selon l'une des revendications 1 à 4, **caractérisé en ce que** les marqueurs de référence (8, 13) sont des nanoparticules diffusant la lumière, des nanoparticules fluorescentes, des points quantiques fluorescents ou des nanodiamants présentant des défauts fluorescents.

6. Procédé selon l'une des revendications 1 à 5, **caractérisé en ce que** les marqueurs de référence (8, 13) sont détectés et/ou identifiés comme marqueurs de référence (8, 13) à l'aide de la longueur d'onde de leur émission de lumière dans l'échantillon (6).

7. Procédé selon l'une des revendications 1 à 5, **caractérisé en ce que** les marqueurs de référence (8, 13) sont détectés et/ou identifiés comme marqueurs de référence (8, 13) dans l'échantillon à l'aide de caractéristiques statistiques du flux de photons de leur émission de lumière.

8. Procédé selon l'une des revendications 1 à 5, **caractérisé en ce que** les marqueurs de référence (8, 13) sont détectés et / ou identifiés comme marqueurs de référence (8, 13) dans l'échantillon (6) par corrélation de plusieurs images de l'échantillon (6).

9. Procédé selon l'une des revendications 1 à 8, **caractérisé en ce que** l'examen de l'échantillon (6) est réalisé par une prise d'images de l'échantillon (6) par un procédé de balayage laser.

10. Procédé selon l'une des revendications 1 à 8, **caractérisé en ce que** l'examen de l'échantillon (6) comprend une détermination des positions de particules individuelles séparées spatialement dans l'échantillon (6) par un procédé MINFLUX.

11. Procédé selon la revendication 10, **caractérisé en ce que,** à partir des positions (21, 22) de l'au moins un marqueur de référence (13), une dérive du / des marqueur(s) de référence (8, 13) par rapport à un système d'imagerie optique du microscope optique (26) est calculé et **en ce que** les positions (21, 22) des différentes particules déterminées selon le procédé MINFLUX sont corrigées d'une valeur de la dérive.

12. Procédé selon l'une des revendications 1 à 11, **caractérisé en ce que** les marqueurs de référence (8, 13) sont fixes par rapport à un support d'échantillon (23) ou sont liés à un support d'échantillon (23) ou sont noyés dans un support d'échantillon (23).

**13.** Procédé selon l'une des revendications 1 à 12, **caractérisé en ce que** les marqueurs de référence (8, 13) sont fixes par rapport à un objet ou une structure dans l'échantillon (6) ou sont liés à un objet ou une structure dans l'échantillon (6).

**14.** Utilisation d'un support d'échantillon (23) avec des marqueurs de référence (8, 13) gravés, encastrés ou liés au support d'échantillon (23) dans un procédé selon l'une des revendications 1 à 13.

**15.** Microscope optique (26) comprenant

- un objectif (33),
- une source lumineuse (27) pour la lumière de balayage,
- des moyens de formation de faisceau pour former dans un échantillon (6) une distribution d'intensité de la lumière de balayage (28) présentant un minimum d'intensité local,
- un dispositif de balayage pour positionner la lumière de balayage (28) dans l'échantillon (6),
- un détecteur pour détecter une émission de lumière de marqueurs de référence (8, 13) dans l'échantillon (6),
- une unité de commande (46) pour commander le dispositif de balayage et pour traiter un signal de détecteur (48) émis par le détecteur,

**caractérisé en ce que** l'unité de commande (46) est adaptée pour mettre en oeuvre un procédé selon l'une des revendications 1 à 13.

Fig. 1

1

Start

Referenzmarker
identifizieren

2

Referenzmarker
lokalisieren  ┈┈┈┈┈┈┈➤  Startposition $r_0$

Driftkorrektur
$\Delta r := 0$

Farbstoffmoleküle
fotoaktivieren

Farbstoffmoleküle
lokalisieren

51

Positionen um $\Delta r$
korrigieren  ┈┈┈➤  Koordinatenspeicher

Messung
beenden?  ──ja──➤  Stop

nein

Driftmessintervall
abgelaufen?

4

Referenzmarker
lokalisieren  ┈┈┈➤  Position $r$

Driftkorrektur
$\Delta r := r - r_0$ berechnen

Fig. 2

Fig. 3

Fig. 4

$t = 0$                    $t > 0$

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015097000 A1
- DE 102017104736 B3
- DE 19959228 A1
- EP 1548485 A1
- WO 2020201430 A1

**In der Beschreibung aufgeführte Nicht-Patentliteratur**

- **BALZAROTTI F ; EILERS Y ; GWOSCH KC ; GYNNÅ AH ; WESTPHAL V ; STEFANI FD ; ELF J ; HELL SW.** Nanometer resolution imaging and tracking of fluorescent molecules with minimal photon fluxes. *Science,* 22. Dezember 2016, vol. 355 (6325), 606-612
- **R. MCGORTY ; D. KAMIYAMA ; B. HUANG.** Active microscope stabilization in three dimensions using image correlation. *Optical Nanoscopy,* 2013, vol. 2 (1), 3
- **J. PRESCHER.** Assembly and optimization of a super-resolution STORM microscope for nanoscopic imaging of biological structures. *Dissertation,* 2016
- **C. GEISLER et al.** Drift estimation for single marker switching based imaging schemes. *Optics Express,* 2012, vol. 20, 7274
- **K. C. GWOSCH et al.** MINFLUX Nanoscopy Delivers Multicolor Nanometer 3D-Resolution in (Living) Cells. *bioRxiv,* 2019
- **M. WEBER et al.** MINSTED fluorescence localization and nanoscopy. *bioRxiv,* 2020